# EUROPEAN PATENT APPLICATION

(11) **EP 4 722 936 A1**
(43) Date of publication of application: **08.04.2026**
(21) Application number: 25738438.8
(22) Date of filing: 08.01.2025
(51) Int. Cl.: G06F 16/16

(54) **FILE MANAGEMENT METHOD AND RELATED DEVICE**

(30) Priority: 10.01.2024 CN 202410039486; 07.06.2024 CN 202410743922
(71) Applicant: Huawei Technologies Co., Ltd., Shenzhen, Guangdong 518129 (CN)
(72) Inventor: BIAN, Chao, Shenzhen, Guangdong 518129 (CN)
(74) Representative: Pfenning, Meinig & Partner mbB
(86) International application number: PCT/CN2025/071193
(87) International publication number: WO 2025/148909

(57) **Abstract**

Embodiments of this application provide a file management method and a related device. The file management method is applied to an electronic device, an operating system runs on the electronic device, and the first operating system provides a first interface, a media data interface, and a second capability. The method includes: running a first application on the first operating system, and displaying a first user interface of the first application, where a first option corresponding to a first function is presented on the first user interface, and the first function includes a file access function; enabling the file access function and displaying a second user interface in response to a first user operation on the first option; and detecting a second user operation of selecting a first media file from one or more media files, and returning a resource identifier of the first media file to the first application through the media data interface, for the first application to access the first media file based on the resource identifier. According to embodiments of this application, an entire file system can be systematically and securely managed and controlled.

## Description

This application claims priorities to Chinese Patent Application No. 202410039486.3, filed with the China National Intellectual Property Administration on January 10, 2024 and entitled "MEDIA FILE PROCESSING METHOD", and to Chinese Patent Application No. 202410743922.5, filed with the China National Intellectual Property Administration on June 7, 2024, and entitled "FILE MANAGEMENT METHOD AND RELATED DEVICE", both of which are incorporated herein by reference in their entireties.

### TECHNICAL FIELD

This application relates to the field of terminal technologies, and in particular, to a file management method and a related device.

### BACKGROUND

With continuous development of the terminal field, more applications are installed in an electronic device, and more files are generated and stored on the electronic device based on the applications. However, currently, the electronic device does not manage such files at all, and the files are placed by a user and the applications randomly. For example, an internal card may be randomly created and modified after a permission to access the entire internal card is granted only with user consent.

Currently, a series of system capabilities are provided on the electronic device to manage and control file access, for example, gradually shrinking an entrance to a media library, providing a system picker (Picker) capability, and shielding a concept of an absolute path. However, a problem of disordered file management is still difficult to be completely eliminated. Currently, there are still problems such as random access to media files by an application, unclear media sources, excessively open permissions for creating files, and disordered file storage directories.

Therefore, how to manage files of applications on the electronic device is a technical problem that needs to be urgently resolved.

### SUMMARY

Embodiments of this application provide a file management method and a related device, to systematically and securely manage and control an entire file system.

According to a first aspect, an embodiment of this application provides a file management method. The method is applied to a first electronic device. A first operating system runs on the first electronic device, a first application is installed on the first operating system, and the first operating system provides a first interface, a media data interface, and a second capability. The first application includes program code for invoking the first interface, the first interface is used to enable a first function provided by the first application, the first interface is used to invoke the media data interface, and the media data interface is used to invoke the second capability. The second capability includes a capability for performing one or more of the following processing on the media file: managing creation of the media file, managing use of the media file, storing the media file, managing deletion and restoration of the media file, and managing storage space for the media file. The method includes: running a first application on the first operating system, and displaying a first user interface of the first application, where a first option corresponding to a first function is presented on the first user interface, and the first function includes a file access function; enabling the file access function and displaying a second user interface in response to a first user operation on the first option, where the second user interface includes one or more media files; and detecting a second user operation of selecting a first media file from one or more media files, and returning a resource identifier of the first media file to the first application through the media data interface, for the first application to access the first media file based on the resource identifier.

In this embodiment of this application, the operating system of the electronic device may manage and control file generation, to resolve problems such as unclear file sources and disordered storage. File usage efficiency is improved. File access and search efficiency is further improved through permission management, type management, and result management. Managing file storage and recording file elimination provide a new deletion and restoration mechanism to make files traceable. In this way, the electronic device systematically and securely manages and controls the entire file system, to improve user experience. In addition, for example, after the first application enables the access function for the first media file, the media data interface may return the resource identifier of the first media file to the first application, and the first application may access the first media file based on the resource identifier. In other words, when the first application enables the file access function for the first media file, the first application cannot randomly access the first media file without obtaining the resource identifier. The media data interface shields direct access of the first application to the first media file, so that any application needs to access the first media file through the media data interface. This avoids a problem of disordered file access, and improves user experience.

In a possible implementation, before returning the resource identifier of the first media file through the media data interface, the method further includes: granting a temporary access permission to the first application to complete the file access function for the first media file.

In this embodiment of this application, the electronic device may query the user or the application that creates the first media file, and after the user or the application agrees to grant authorization, may grant the temporary access permission for the first media file to the first application, so that the first electronic device centrally manages the entire file system.

In a possible implementation, the method further includes: when the first application has an access permission for the first media file or obtains a temporary access permission for the first media file, returning the first media file to the first application through the media data interface.

In this embodiment of this application, when the first application has the access permission for the first media file, and the first application does not need to access the first media file based on the resource identifier, the media data interface may directly return the first media file to the first application. This simplifies an access procedure, so that the first electronic device centrally manages the entire file system.

In a possible implementation, the method further includes: when the first application does not obtain the access permission or the temporary access permission for the first media file, returning, to the first application through the media data interface, a result indicating that the file access function fails to be enabled.

In this embodiment of this application, the electronic device may determine, based on the permission of the first application, whether the first function can be enabled for the first file, and if the first function cannot be enabled for the first file, return, to the first application, the result indicating that the first function fails to be enabled.

In a possible implementation, a parameter input by the first interface includes one or more of the following: a device name, an application name of the first application, and a parameter input by the first application. The parameter input by the first application includes a parameter indicating the first function and parameter content. The parameter content includes one or more of the following: description information of the first function, the first file, and indication information of the first file.

In this embodiment of this application, an input parameter of an interface is standardized, so that a plurality of applications can implement a same function through a same interface. For example, both a system camera application and a third-party camera application can invoke the generation function interface to implement a photographing function. In comparison with a solution in which different applications invoke different interfaces, this resolves a problem of confusing of interfaces invoked during application running, and reduces development difficulty for a developer.

In a possible implementation, the media data interface is encapsulated with a third capability, and the third capability includes a capability for performing one or more of the following processing on the first media file: acquisition, encoding, storage, sharing, decoding, and playing. A parameter input by the media data interface includes interface indication information, indication information of the first function, and the first file or the indication information of the first file. The interface indication information indicates a capability invoked by the media data interface in the second capability, the indication information of the first file is all or a part of parameters input by the first application, and/or the indication information of the first file is determined by the first operating system.

In this embodiment of this application, the media data interface is encapsulated with a third capability, can provide upward support for invoking of each function interface, and may be further configured to manage underlying hardware and/or an algorithm, and systematize and secure a file, so that various application programs can be used more efficiently, and user experience is provided.

In a possible implementation, the parameter input by the third capability includes: the indication information of the first function, and the first file or the indication information of the first file. The indication information of the first file is all or a part of parameters input by the first application, and/or the indication information of the first file is determined by the first operating system.

In this embodiment of this application, the indication information of the file may be input by the first application or the first operating system. This greatly improves a success rate and efficiency of enabling the first function.

In a possible implementation, the first function further includes at least one of the following functions: a file creation function, a file playing function, a file deletion function, a file restoration function, a file backup function, a file migration function, a file sharing function, and a file space management function.

In this embodiment of this application, file generation can be managed and controlled based on different functions, to resolve problems such as unclear file sources and disordered storage. File usage efficiency is improved. File access and search efficiency is further improved through permission management, type management, and result management.

In a possible implementation, the first function is a file creation function, the first file is a data flow, the indication information of the first file includes one or more of the following: a file name, a file owner, file permission, a file storage path, a file size, and a file type, and the interface indication information indicates an interface for storing the first file in the second capability; or the first function is the file access function, the first file is a photo, the indication information of the first file includes one or more of the following: a file name, a file owner, a file storage path, a photo access permission, and a photo access manner, and the interface indication information indicates an interface for storing the first media data in the second capability; or the first function is the file playing function, the first file is an audio or a video, the indication information of the first file includes one or more of the following: a file name, a file owner, a file size, a playing manner, and playing duration, and the interface indication information indicates an interface for playing the first media data in the second capability; or the first function is the file deletion function, the indication information of the first file includes one or more of the following: a file name, a file owner, a file storage path, a file size, and a file deletion manner, and the interface indication information indicates an interface for storing the first file in the second capability; or the first function is the file restoration function, the indication information of the first file includes one or more of the following: a file name, a file owner, a restorable file size, and restorable content, and the interface indication information indicates an interface for storing the first file in the second capability.

In this embodiment of this application, an example of a manner of enabling the file processing function by some function interfaces is provided, so that the electronic device systematically and securely controls and manages the entire file system, to improve user experience.

In a possible implementation, the third capability includes a generation service capability. The generation service capability is used to create the first file, and set one or more of the following fields for the first file when creating the first file: a file owner, a file name, a file storage path, a file use permission, or a file attribute, and the first file is one of a text, a photo, audio, or a video.

In this embodiment of this application, the electronic device may manage file creation, setting of owner information of the file can avoid a problem that a source of a file is unknown on the electronic device, a problem of a disordered file storage directory is disordered can be avoided by standardizing a file storage location, and a problem that an excessive permission is required for file processing of a file can be resolved by restricting a use permission of the file, to implement standardized, unified, and convenient management and control on files, so as to improve user experience.

In a possible implementation, files with a same file owner on the first electronic device are stored in a same root folder in sequence.

In this embodiment of this application, the electronic device provides, by using a unified data management framework, a capability for performing unified processing on files of applications, so that the electronic device implements unified management on the files of the applications, and resolves a problem of a disordered file storage directory.

In a possible implementation, the third capability includes a use service capability. The use service capability is used to manage and control a use permission of the first file, or determine, based on a use manner corresponding to the parameter input by the first application, whether the first application meets a use permission of the first file, and return a use result. The use permission includes one or more of the following: an access permission, a playing permission, an editing permission, and a sharing permission.

In this embodiment of this application, the electronic device may manage a permission of each application, so that file use efficiency can be improved. In addition, files are managed in a standardized, unified, and convenient manner through permission management, type management, result management, and the like, to improve user experience.

In a possible implementation, the third capability includes an elimination service capability. The elimination service capability is used to delete the first file or restore the first file based on the parameter input by the first application. In this embodiment of this application, the electronic device may manage elimination of each file, so that each file can be traced, and user experience is improved.

In a possible implementation, the third capability includes a storage service capability. The storage service capability is used to store the first file in a corresponding storage location based on the parameter input by the first application, and return a storage result, or back up or migrate the first file.

In this embodiment of this application, the electronic device may store a file, so that file processing is better implemented, and device-device collaboration, device-cloud collaboration, and the like can be supported.

In a possible implementation, the third capability includes a space management capability. The space management capability is used to perform one or more of the following: managing storage space for the first file; setting a storage location of the first file in storage space; and when free storage space in the storage space is less than a preset threshold, deduplicating or compressing a file stored in the storage space.

In this embodiment of this application, the storage space for the first file may be managed in a unified and standardized manner, to improve storage space utilization. For example, according to different storage priority rules, files may be stored in corresponding storage space based on storage priorities.

According to a second aspect, an embodiment of this application provides an electronic device. A first operating system runs on the electronic device, a first application is installed on the first operating system, and the first operating system provides a first interface, a media data interface, and a second capability. The first application includes program code for invoking the first interface, the first interface is used to enable a first function provided by the first application, the first interface is used to invoke the media data interface, and the media data interface is used to invoke the second capability. The second capability includes a capability for performing one or more of the following processing on the media file: managing creation of the media file, managing use of the media file, storing the media file, managing deletion and restoration of the media file, and managing storage space for the media file. The electronic device includes a memory, a processor, and a computer program stored in the memory. The processor executes the computer program to implement the file management method provided in the first aspect.

According to a third aspect, an embodiment of this application provides a computer-readable storage medium. The computer program includes a first operating system, a first application is installed on the first operating system, and the first operating system provides a first interface, a media data interface, and a second capability. The first application includes program code for invoking the first interface, the first interface is used to enable a first function provided by the first application, the first interface is used to invoke the media data interface, and the media data interface is used to invoke the second capability. The second capability includes a capability for performing one or more of the following processing on the media file: managing creation of the media file, managing use of the media file, storing the media file, managing deletion and restoration of the media file, and managing storage space for the media file. When the computer program is executed by a processor, the steps of the file management method provided in the first aspect are implemented.

According to a fourth aspect, an embodiment of this application provides a computer program product. The computer program product includes a computer program. The computer program includes a first operating system, a first application is installed on the first operating system, and the first operating system provides a first interface, a media data interface, and a second capability. The first application includes program code for invoking the first interface, the first interface is used to enable a first function provided by the first application, the first interface is used to invoke the media data interface, and the media data interface is used to invoke the second capability. The second capability includes a capability for performing one or more of the following processing on the media file: managing creation of the media file, managing use of the media file, storing the media file, managing deletion and restoration of the media file, and managing storage space for the media file. When the computer program is executed by a processor, the steps of the file management method provided in the first aspect are implemented.

It should be understood that the electronic device provided in the second aspect of this application, the computer-readable storage medium provided in the third aspect, and the computer program provided in the fourth aspect are consistent with the technical solutions in the first aspect of this application. For specific content and beneficial effects of the electronic device, the computer-readable storage medium, and the computer program, refer to the file management method provided in the first aspect. Details are not described herein again.

### BRIEF DESCRIPTION OF DRAWINGS

To describe the technical solutions in embodiments of this application or in the background more clearly, the following briefly describes the accompanying drawings for describing embodiments of this application or the background.
FIG. 1 is a diagram of a difference between a file access method for an application and file access in a file management method according to an embodiment of this application;
FIG. 2 is a diagram of an architecture of an OS according to an embodiment of this application;
FIG. 3 is a diagram of an architecture of another OS according to an embodiment of this application;
FIG. 4 is a diagram of specifically invoking a function interface by a first application according to an embodiment of this application;
FIG. 5 to FIG. 9 are a group of diagrams of invoking relationships for invoking function interfaces by a first application according to an embodiment of this application;
FIG. 10 is a diagram of a file owner according to an embodiment of this application;
FIG. 11A to FIG. 11D are diagrams of a group of user interfaces according to an embodiment of this application;
FIG. 12 is a diagram of refining of a use permission according to an embodiment of this application;
FIG. 13 is a diagram of a capability supported by a storage service according to an embodiment of this application;
FIG. 14 is a diagram of restoration procedures corresponding to different deletion manners according to an embodiment of this application;
FIG. 15 is a diagram of compression according to an embodiment of this application;
FIG. 16 is a schematic flowchart of a file management method according to an embodiment of this application;
FIG. 17 is a diagram of a user interface according to an embodiment of this application;
FIG. 18 is a diagram of an interface invoking relationship when a file access function is enabled according to an embodiment of this application;
FIG. 19 and FIG. 20 are diagrams of another group of interfaces according to an embodiment of this application; and
FIG. 21 is a diagram of a structure of an electronic device according to an embodiment of this application.

### DESCRIPTION OF EMBODIMENTS

The following describes embodiments of this application with reference to the accompanying drawings in embodiments of this application.

In the specification, claims, and accompanying drawings of this application, the terms "first", "second", and so on are intended to distinguish between different objects but do not indicate a particular order. In addition, the terms "including", "having", and any other variant thereof are intended to cover non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that in this application, "at least one piece (item)" refers to one or more and "a plurality of" refers to two or more. The term "and/or" is used for describing an association relationship between associated objects, and represents that three relationships may exist. For example, "A and/or B" may represent the following three cases: Only A exists, only B exists, and both A and B exist, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one of a, b, or c may indicate a, b, c, a and b, a and c, b and c, or a, b, and c, where a, b, and c may be singular or plural.

"Embodiment" mentioned in this specification means that a particular characteristic, structure, or feature described with reference to embodiments may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

The term "user interface (user interface, UI)" in the following embodiments of this application is a medium interface for interaction and information exchange between an application or an operating system and a user. The user interface implements conversion between an internal form of information and a form acceptable to the user. The user interface is source code written in a specific computer language like Java or an extensible markup language (extensible markup language, XML). Interface source code is parsed and rendered on an electronic device, and is finally presented as content that can be recognized by the user. A frequently-used representation form of the user interface is a graphical user interface (graphic user interface, GUI), and is a user interface that is displayed in a graphical manner and that is related to a computer operation. The user interface may be a visual interface element like a text, an icon, a button, a menu, a tab, a text box, a dialog box, a status bar, a navigation bar, or a widget that is displayed on a display of the electronic device.

First, for ease of understanding embodiments of this application, the following specifically analyzes a technical problem that needs to be resolved in embodiments of this application and an applicable application scenario.

File processing may be understood as full-lifecycle management of a file and a persistence capability of file data. For a file, activities in a lifecycle of the file include: file generation, file access and search, file sharing, backup, and migration, file elimination, and the like.

With continuous development of the terminal field, more applications are installed in an electronic device, and more related files are generated and stored on the electronic device based on an application or a service, or more files (such as a photo, an audio, and a video) are generated and stored on the electronic device based on a user operation. Currently, a series of system capabilities are provided on the electronic device to manage and control file access, for example, gradually shrinking an entrance to a media library, providing a system picker (Picker) capability, and shielding a concept of an absolute path. However, the current electronic device still allows a user and an application to randomly process files.

For example, currently, although the electronic device limits permissions of applications to access an internal memory (namely, an internal card mentioned in the following embodiments), various applications can obtain permissions to access the entire internal card only with user consent, and randomly access, create, and modify files in most applications in the internal card. In addition, each application applies for a file permission based on the entire internal card of the electronic device, and the applied permission is completely defined by a developer, and cannot be managed and controlled by the electronic device. For example, a terminal user does not want some third-party applications to access photos related to portraits photographed by a camera in Gallery. However, after Gallery grants a permission to a third-party application, the third-party application can access all photos in Gallery, and cannot be managed and controlled by the electronic device. In addition, the foregoing permissions are defined by developers of third-party applications. For the terminal user, it is impossible to determine whether an application should access a file or a file should be accessed.

Further, because any application may apply for a permission of a memory to randomly create a file, a large quantity of junk files exist on the electronic device, and the electronic device cannot sense sources and does not know owners of the created files. In addition, a file storage directory is disordered. A file created by an application can be randomly accessed, modified, or shared by another application. For example, the user usually finds various photo files with unknown sources in Gallery.

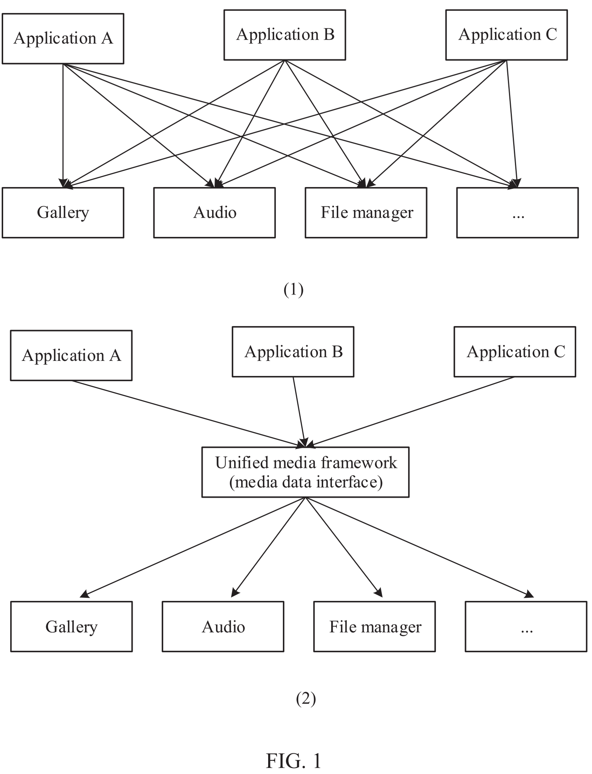

File access is used as an example. Refer to FIG. 1. FIG. 1 is a diagram of a difference between a file access method for an application and file access in a file management method according to an embodiment of this application. (1) in FIG. 1 is a diagram of a principle of a method for accessing data by a current application in terms of data access by an application. (2) in FIG. 1 is a diagram of a principle of a data management method according to an embodiment of this application in terms of data access by an application.

Any application like an application A, an application B, an application C, and the like shown in (1) in FIG. 1 can randomly access one or more of Gallery, Audio, or File manager in an electronic device by selecting a corresponding capability based on a service. For example, any application can access a photo or a video managed by Gallery on the electronic device, or store a photo or a video in Gallery. For another example, any application can access or delete an audio file on the electronic device, for example, recording or music. For another example, any application can also randomly access a document in File manager. In other words, for various applications, operations such as file creation, use, sharing, or deletion can be randomly performed by obtaining only initial authorization of the electronic device or a user for an internal card.

In conclusion, after the electronic device grants a permission to each application, each application is basically not managed and controlled by the electronic device when processing a file. As a result, problems such as an unclear file creation source, an excessively open file processing permission, and a disordered file storage directory are caused, the electronic device cannot systematically and securely manage and control an entire file system, and user experience is poor.

In view of this, embodiments of this application provide a file management method and a related device. The file management method is implemented by an operating system (operating system, OS) of an electronic device.

The OS may combine one or more commands for underlying hardware and/or algorithms, and construct a new file processing solution based on a current unified media framework, to implement full-lifecycle management on a file of each application, and resolve problems such as an unclear file source, an excessively open file creation permission, and a disordered file storage directory that exists in a current electronic device.

For example, any application like the application A, the application B, the application C, and the like shown in (2) in FIG. 1 is used to implement file processing on files of Gallery, Audio, File manager, and the like by using a unified media framework. For example, if there is a corresponding file processing option on a user interface of an application, the application may invoke a file processing function interface for enabling a file processing function. After detecting that the application invokes the file processing function interface, a media data interface of the unified media framework in the OS may enable the file processing function or return a result of invoking the file processing function interface. For example, if there is a file processing option on a user interface of the application A, the application may invoke the file access function interface for enabling the file access function. After detecting that the application invokes the file access function interface, the media data interface of the unified media framework in the OS may enable the file access function, to complete access to a file. In other words, when any application in this embodiment of this application creates, uses, eliminates, or manages a media file on the electronic device, the application does not need to deliver a command to underlying hardware and/or an algorithm, but only needs to send a command transmission parameter to the media data interface of the unified media framework in the OS, and wait for a file or a response returned by the media data interface based on the command.

The media data interface may be considered as a unified abstraction of a hardware and/or software capability, and is an upper-layer concept abstracted based on a command of an entire file lifecycle. In this way, when processing files of applications, the electronic device does not need to use different interfaces corresponding to the applications to deliver commands to underlying hardware and/or algorithms to implement file processing, but directly implements standardized, unified, and convenient management and control on the files through the media data interface of the electronic device. In addition, the OS may further manage file generation by introducing a concept of a file owner, to resolve problems such as unclear sources and disordered storage from a source. File usage efficiency is improved. File access and search efficiency is further improved through permission management, type management, and result management. Managing file storage, including sharing, backup, and migration, better implements file processing through unified registration and device-cloud collaboration. Recording file elimination provides a new deletion and restoration mechanism to make files traceable. Managing storage space ensures proper use of space. For a specific implementation, refer to related descriptions in the following embodiments. Details are not described herein in embodiments of this application.

The electronic device may be a portable terminal device carrying HarmonyOS, iOS, Android, Microsoft, or another operating system, for example, a mobile phone, a tablet computer, or a wearable device; or may be a non-portable terminal device, for example, a laptop (Laptop) computer having a touch-sensitive surface or a touch panel, or a desktop computer having a touch-sensitive surface or a touch panel. A software system of the electronic device 100 may use a layered architecture, an event-driven architecture, a microkernel architecture, a micro service architecture, or a cloud architecture. In embodiments of this application, HarmonyOS with a layered architecture is used as an example to describe a software structure of an electronic device 100.

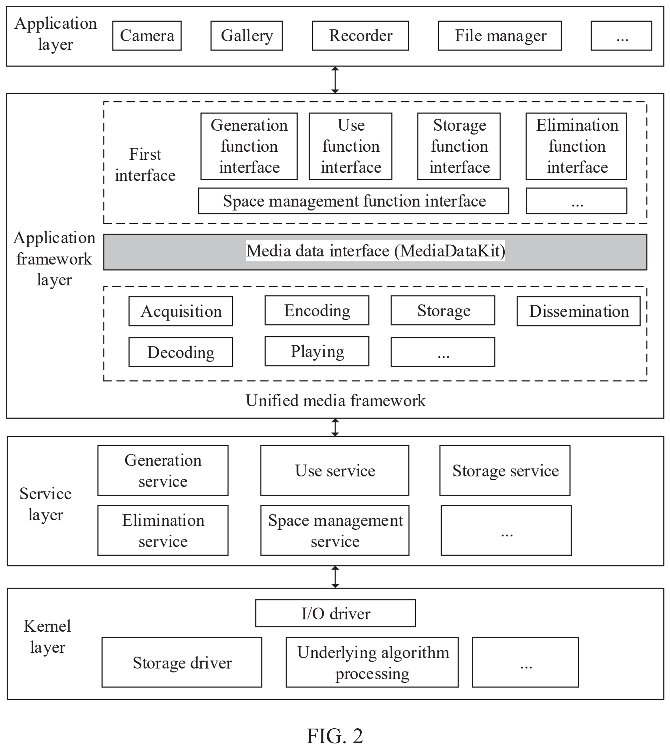

Refer to FIG. 2. FIG. 2 is a diagram of an architecture of an OS according to an embodiment of this application.

As shown in FIG. 2, in a layered architecture, software is divided into several layers, and each layer has a clear role and task. The layers communicate with each other through a software interface. In some embodiments, the OS is divided into four layers: an application layer, an application framework layer, a service layer, and a kernel layer from top to bottom. An upper layer indicates more interactions with a user, and a lower layer indicates more system capabilities. The OS shown in FIG. 2 is merely an example, and may further include more or fewer modules. This is not limited in embodiments of this application.

The application layer may include a series of application packages, and is mainly used for outputting and using a media file. For example, as shown in FIG. 2, the application layer may include a camera, a gallery, a recorder, a file manager, or another application. For example, the media file may be a photo, a video, an audio, a text, an installation package, or the like. This is not specifically limited in embodiments of this application.

It may be understood that, in addition to the application shown in FIG. 2, the application layer may further include more or fewer applications, for example, various system applications, self-developed applications, third-party applications, other similar applications such as a gallery application, a music application, and a video application, and a first application or a second application mentioned in the following related embodiments. This is not limited in embodiments of this application.

The application framework layer provides an application programming interface (application programming interface, API) and a programming framework for an application at the application layer. The application framework layer includes some predefined functions. The framework layer may further include a window manager, a content provider, a view system, a phone manager, a resource manager, and other modules, which are not described herein.

As shown in FIG. 2, a unified media framework at the application framework layer may be referred to as a unified file framework, a unified media file framework, a file management framework, a media file management framework, or the like. The unified media framework may include a first interface used to provide a file processing function for an application at the application layer, and the first interface may also be referred to as a first picker. Different first interfaces may be used to enable different file processing functions. For example, the first interface may include but is not limited to the following interfaces: a generation function interface, a use function interface, a storage function interface, an elimination function interface, a space management function interface, and another related interface. The first interface may alternatively be an AMS (Activity Manager Service, AMS) interface, and is used for starting, switching, scheduling, and managing and scheduling of an application process. A plurality of different first interfaces may be separately invoked by applications at the application layer, to assist the applications at the application layer in processing media files.

For example, the generation function interface may be used to enable a file generation function, to support an application in implementing a media file creation function and the like. A plurality of different generation function interfaces may be further encapsulated, and one generation function interface may be used to enable one generation function, for example, a photo generation function, an audio generation function, or a video generation function. The generation function interface is used to select a corresponding interface from the plurality of generation function interfaces based on parameters input by different applications.

The use function interface may be used to enable a file use function, that is, support an application in implementing access, search, editing, running, or the like of a media file. Different enabled file use functions correspond to different input parameters.

The storage function interface may be used to enable a file storage function, that is, support an application in storing a media file.

The elimination function interface may be used to enable a file elimination function, to support an application in implementing deletion, restoration, or the like of a media file. Correspondingly, different file elimination types correspond to different input parameters.

The space management function interface may be used to enable a space management function, to support an application in implementing space management of a media file, so that the electronic device can efficiently use the file.

It should be understood that descriptions of the other function interfaces are similar to those of the generation function interface. Details are not described herein again.

It can be learned that the application framework layer may provide a unified interface for a plurality of applications at the application layer to invoke, so that the plurality of applications can implement a same function through a same interface. For example, both a system camera application and a third-party camera application can invoke the generation function interface to implement a photographing function. In comparison with a solution in which different applications invoke different interfaces, this resolves a problem of confusing of interfaces invoked during application running.

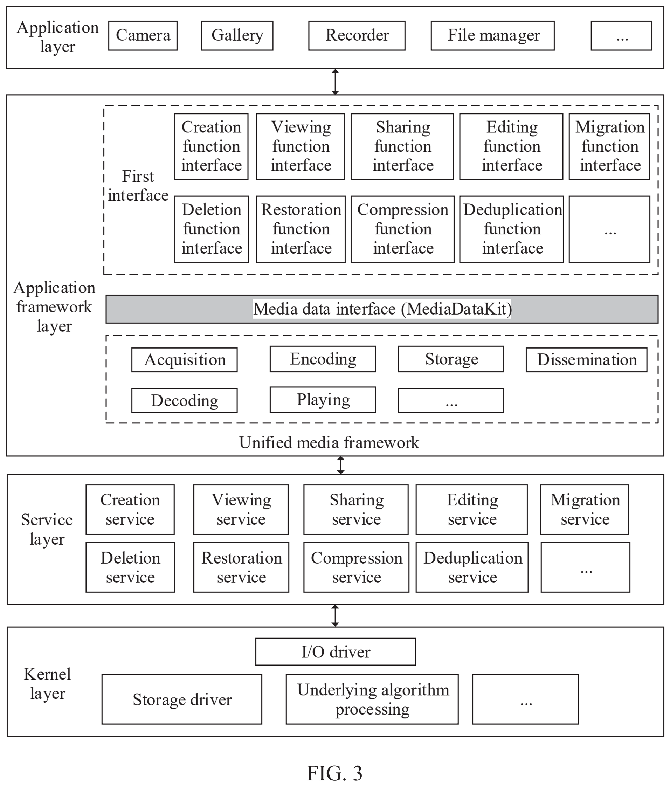

In some other embodiments, the related interface that provides the file processing function is merely an example for description. Refer to FIG. 3. FIG. 3 is a diagram of an architecture of another OS according to an embodiment of this application. As shown in FIG. 3, more refined interfaces may be provided for applications at an application layer for different file processing functions. For example, the first interface may further include but is not limited to the following interfaces: a creation function interface, an access function interface, a sharing function interface, an editing function interface, a migration function interface, a deletion function interface, a restoration function interface, a compression function interface, a deduplication function interface, and the like. This is not limited in embodiments of this application.

In addition, a unified media framework at an application framework layer may further include a media data interface (MediaDataKit) that provides file processing for the OS system, which may also be referred to as a media data picker (Media Data Picker). The media data interface may be configured to implement generation, use (for example, editing, access, and playing), storage, and elimination (for example, deletion and restoration) of a file, space management, and the like. In addition, when the media data interface is configured to use a media file like a photo, the media data interface may be a photo picker (Photo Picker) or the like.

The media data interface is encapsulated with a plurality of third capabilities, and the third capabilities include a capability for performing one or more of the following processing on a media file, for example, acquisition (Acquisition), encoding (code), storage (storage), dissemination (share), decoding (decode), playing (play), and others (other). The third capability may also be referred to as a basic capability, and may assist the OS system in invoking a lower-layer hardware and/or software capability when invoking an upper-layer file processing-related interface in an application at the application layer, to implement unified processing on a media file. Certainly, in another implementation, a related interface for providing file processing to the OS may also be provided for a third-party application.

The media data interface may provide upward support for invoking of a generation function interface, a use function interface, a storage function interface, an elimination function interface, a space management function interface, and the like, and can also be configured to: manage underlying hardware and/or algorithms, and integrally systematize and secure files, for more efficiently using by various applications and providing user experience. That is, the generation function interface, the use function interface, the storage function interface, the elimination function interface, the space management function interface, and the like can invoke the media data interface. In this case, the media data interface may pick, from the plurality of third capabilities based on an invoked function interface, a third capability for running and supporting the function interface. For example, acquisition, encoding, or storage may be used to support the foregoing file generation function, and encoding, dissemination, decoding, playing, or storage may be used to support the foregoing file use function. The third capability may also be referred to as a basic capability supporting file processing.

For example, when the electronic device 100 detects an operation of accessing a photo by a user through a gallery application, the gallery application may invoke the use function interface, and the use function interface invokes the MediaDataKit. The MediaDataKit determines, based on the use function interface, that an operation performed on media data is "storage". Therefore, the MediaDataKit invokes a storage capability to access the stored photo.

It may be understood that the application framework layer may further include more or fewer functional modules. This is not limited in embodiments of this application.

A service layer may be used for upward connection to the media data interface, and includes a plurality of second capabilities. The second capabilities include a capability for performing one or more of the following processing on a media file: a generation service capability, a use service capability, a storage service capability, an elimination service capability, a space management service capability, or the like.

A generation service may be used to manage creation of the media file, and implement service logic generated during creation of the media file. For example, the media file is a first media file. The generation service capability is used to create the first media file, and set one or more of the following fields for the first media file when creating the first media file: a file owner, a file name, a file storage path, a file use permission, or a file attribute, where the first media file is one of a text, a photo, an audio, or a video.

A use service may be used to manage use of the media file, and implement service logic for using the media file. For example, a first application uses a first media file. The use service capability is used to manage and control a use permission for the first media file, or determine, based on a use manner corresponding to a parameter input by the first application, whether the first application meets a use permission for the first media file, and return a use result, where the use permission includes one or more of the following: an access permission, a playing permission, an editing permission, and a sharing permission.

A storage service may be used to store the media file, and implement service logic for storing the media file. For example, a first application stores a first media file. The storage service capability is used to store the first media file in a corresponding storage location based on a parameter input by the first application, and return a storage result, or back up or migrate the first media file.

An elimination service may be used to manage deletion and restoration of the media file, and implement service logic for deleting or restoring the media file. For example, a first application deletes or restores a first media file. The elimination service may be used to delete the first media file or restore the first media file based on a parameter input by the first application.

The space management service may be used to manage storage space for the media file, and implement service logic for unified storage space management of the media file. For example, a first application manages storage space for the first media file. The space management service is used to perform one or more of the following: managing the storage space for the first media file, setting a storage location of the first media file in the storage space, and when free storage space in the storage space is less than a preset threshold, deduplicating or compressing files stored in the storage space.

In some other embodiments, the plurality of second capabilities of the service layer may be further provided at the application framework layer, so that the media data interface invokes the plurality of second capabilities by using the third capability. This is not specifically limited in embodiments of this application. In this way, each application at the application layer needs to invoke only a corresponding file processing function interface and transmit an input parameter to the file processing function interface, so that the OS may enable a corresponding file processing function for the application. This simplifies an application operation, and can ensure consistency of effects of enabling file processing functions for applications.

The kernel layer is a layer between hardware and software, and can be compatible with different hardware devices. Different electronic devices may use processing chips of different models or types, that is, hardware is different. The kernel layer in this embodiment of this application may be configured to support processing of hardware, a driver, and an algorithm. The kernel layer includes at least an input/output I/O driver, a storage driver, underlying algorithm processing, and the like.

The mentioned unified media file management can be implemented by using an interface module at the framework layer provided in this application. For example, after invoking a file processing function interface corresponding to a file processing function and inputting a corresponding input parameter, an application may run the media data interface at the framework layer, and the media data interface picks, from the plurality of third capabilities, a third capability that supports the file processing function interface. The third capability picks, at the service layer, a second capability corresponding to the file processing function for running. In this way, a unified management capability of a file lifecycle can be provided, and a corresponding interface capability can be provided based on a user requirement, to implement file generation, use, storage, elimination, and the like, so as to meet file processing requirements of the user in different scenarios.

Based on the software architecture shown in FIG. 2, an example in which the first application invokes a first function is used to describe an invoking relationship between the interfaces at the foregoing layers.

A parameter input by the first interface includes one or more of the following: a device name, an application name of the first application, and a parameter input by the first application. The device name and the application name of the first application may be determined by a first operating system, and the parameter input by the first application includes a parameter indicating the first function and parameter content. The parameter indicating the first function and the parameter content are in a form of key-value, where the key indicates the first function. The parameter content may also be referred to as a parameter value or a value. The parameter content includes one or more of the following: description information of the first function, the first media file, and indication information of the first media file. The indication information of the first media file may be understood as a storage path of the first media file (namely, a storage location of the first media file), a file size of the first media file, a file name of the first media file, a manner of accessing the first media file, and the like. The first media file may be one of a plurality of media files on the electronic device.

Then, the first interface may continue to invoke the media data interface, and a parameter input by the media data interface includes interface indication information, indication information of the first function, and the first media file or the indication information of the first media file. The interface indication information indicates a capability invoked by the media data interface in the third capability, and the interface indication information and the indication information of the first media file are all or a part of parameters input by the first application, and/or the indication information of the first media file is determined by the first operating system.

Correspondingly, the media data interface may continue to invoke the third capability, and a parameter input by the third capability includes the indication information of the first function, and the first media file or the indication information of the first media file. It may be understood that the indication information of the first media file may also be all or a part of parameters input by the first application, and/or the indication information of the first media file may also be determined by the first operating system.

Finally, the third capability may invoke one or more second capabilities to implement the first function.

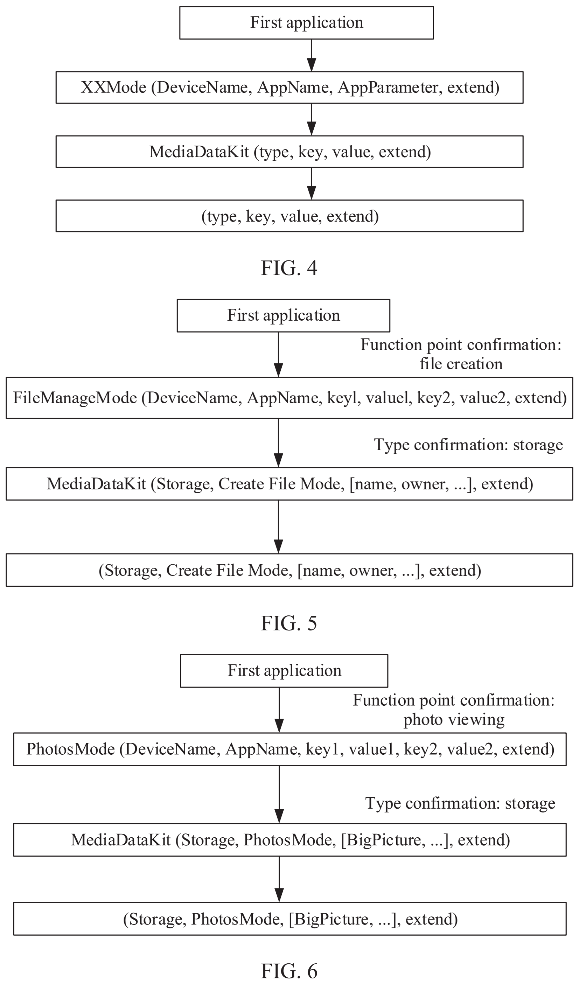

Refer to FIG. 4. FIG. 4 is a diagram of specifically invoking a function interface by a first application according to an embodiment of this application.

As shown in FIG. 4, the first application may be the camera application, the gallery application, the music application, the video application, or the like that is at the application layer and that is mentioned in FIG. 2 or FIG. 3. XXMode may be a first interface corresponding to any function mentioned in FIG. 2 or FIG. 3, for example, an interface corresponding to a function like a file management function (FileManageMode), an editing function (EditMode), a storage function (StorageMode), or a sharing function (ShareMode). MediaDataKit is a media data interface.

An option corresponding to any function may be presented on a user interface of the first application, and after a user operation is detected, a function may be triggered to be enabled. The function may include one or more of processing such as generation, use, storage, elimination, and space management performed on a media file.

An XXMode interface is in a form of XXMode (DeviceName, AppName, AppParameter, and extend).

A device name (DeviceName) may be a device name of a device to which the first application that invokes the interface belongs.

An application name (AppName) may be a name of the first application that invokes the XX Mode interface.

The parameter (AppParameter) input by the first application includes one or more parameters input by the first application after the application detects the user operation. For example, if the user operation is a file creation operation, the parameter input by the first application may include a file name, a file owner, a file permission, a file storage path, a file size, a file type, and the like.

An extend field (extend) may be used to embed a capability or build a differentiated capability.

It may be understood that the device name, the application name, and the extension field are optional.

After the first application invokes the XXMode interface, the XXMode interface may invoke MediaDataKit. An interface form of MediaDataKit is MediaDataKit (type, key, value, extend).

A type (type) indicates a type of processing performed on a file. The type may include but is not limited to the following: a normal type (normal), acquisition (Acquisition), encoding (code), storage (storage), sharing (share), decoding (decode), playing (play), and others (other). The type may be determined based on a previous interface of MediaDataKit that is invoked. For example, if a previous interface invoked by the camera application is a FileManageMode interface, the electronic device may determine that a photo creation function is currently required, and perform storage processing on a captured picture flow, which is considered as a storage type.

A function point indication parameter (key) indicates a function point to be started. Each type may include a plurality of different function points. For example, for the acquisition type, a photographing function, a video recording function, a recording function, and the like may be correspondingly included. The function point indication parameter (key) may be directly determined by a name of a previous interface of MediaDataKit that is invoked or AppParameter transferred in MediaDataKit. For example, if the previous interface is a FileManageMode interface, the function point indication parameter (key) may be CreateFileMode.

A value (value) required by a function point indicates data required for implementing the function point. For example, for a photo creation function, a picture flow (pictureFlow) is required. The value (value) required by the function point may be obtained from the parameter (AppParameter) input by the first application. If some values cannot be obtained from the parameter (AppParameter) input by the first application, an operating system may supplement these values. In other words, the value (value) required by the function point may include some or a part of the parameter (AppParameter) input by the first application, and/or a parameter determined by the operating system.

The function point indication parameter (key) and the value (value) required by the function point may form a key-value pair. In other words, the function point indication parameter (key) and the value (value) required by the function point are in a correspondence. One key may correspond to one or more values. One or more pairs of keys and values, for example, key1 and value1, and key2 and value2, are transferred in MediaDataKit.

The extend field (extend) may be used to embed a capability or build a differentiated capability.

After the MediaDataKit interface is invoked, another capability provided by the framework layer may be invoked based on the type (type). For example, if the type (type) is encoding, an encoding capability may be invoked to code a file. If the type (type) is storage, a storage capability may be invoked to store a file. If the type (type) is sharing, a share capability may be invoked to share a file. If the type (type) is decoding, a decoding capability may be invoked to decode a file. If the type (type) is playing, a playing capability may be invoked to play a file. A parameter transferred by a capability like acquisition, encoding, storing, sharing, decoding, or playing may include key, value, and extend.

In a process in which any capability like acquisition, encoding, storage, sharing, decoding, or playing is invoked, a plurality of capabilities such as a generation service capability, a use service capability, a storage service capability, an elimination service capability, a space management service capability, and others may be further invoked, to standardize and unify media data. The generation service capability may be used to manage creation of a first media file. The use service capability may be used to manage use of the first media file. The storage service capability may be used to store the first media file. The elimination service capability may be used to manage deletion and restoration of the first media file. The space management service capability may be used to manage storage space for the first media file. For specific manners, refer to related descriptions in the following embodiments. Details are not described herein in this embodiment of this application.

In some implementations, in a process in which any capability like acquisition, encoding, storage, sharing, decoding, or playing is invoked, some capabilities in the capabilities like the generation service capability, the use service capability, the storage service capability, the elimination service capability, the space management service capability, and others may be invoked, and may be specifically determined by an application or a first operating system.

In some implementations, after the XXMode interface is invoked, MediaDataKit may be bypassed, and another framework layer interface at a lower layer of MediaDataKit may be directly invoked, to implement a function enabled by the application.

In some implementations, the XXMode interface may be a kit, or may be a picker (picker). When the XXMode interface is implemented as a picker, MediaDataKit may be further correspondingly refined into a plurality of interfaces with more detailed functions. In this way, the XXMode interface may pick an appropriate interface from the plurality of interfaces for invoking.

After an interface at the framework layer is invoked, interfaces at a service layer and a kernel layer continue to be invoked downward, to implement a corresponding file processing function.

For invoking relationships between the foregoing interfaces, for example, refer to FIG. 5 to FIG. 9. FIG. 5 to FIG. 9 are a group of diagrams of invoking relationships of function interfaces invoked by the first application according to an embodiment of this application.

**For example, the first application invokes a generation function.**

In some embodiments, the first function is a file creation function. The first media file is a data flow. Indication information of the first media file includes one or more of the following: a file name, a file owner, a file permission, a file storage path, a file size, and a file type. Interface indication information indicates a capability for storing the first media file in the third capability.

As shown in FIG. 5, the first application may be a camera application. After receiving a user operation of saving a current photographed photo, the first application invokes a file management function interface (FileManageMode), and inputs the following parameters to the interface: DeviceName, AppName, key1, value1, key2, value2, and extend. After the first application invokes the file management function interface (FileManageMode), the file management function interface (FileManageMode) invokes MediaDataKit, and a parameter transferred by MediaDataKit includes: Storage, CreateFileMode, [name, owner, ...], and extend.

Herein, key1 may indicate enabled function point photo creation, and value1 may be a picture flow obtained through photographing, namely, a data flow of the first media file to create a photo and the like.

Storage indicates a storage interface to be invoked by MediaDataKit, CreateFileMode is a to-be-started function point, and [name, owner, ...] indicates parameter information of a file created this time, where name is a file name, and owner is a file owner. Herein, owner may be the parameters DeviceName and AppName transferred when the FileManageMode interface invokes MediaDataKit. Other indication information, for example, a file permission, a file storage path, a file size, and a file type, of the file may be further transferred.

After the FileManageMode interface invokes MediaDataKit, MediaDataKit invokes a storage capability. A parameter transferred by the storing capability includes: CreateFileMode, [name, owner, ...], and extend.

Then, in a running process of the storage capability, one or more of the generation service capability, the use service capability, the storage service capability, the elimination service capability, the space management service capability, or others may be invoked to create a photo. For example, the generation service capability may be invoked to create the photo, and the storage service capability may be invoked to store the created photo in a storage location specified by a space management service.

**For example, the first application invokes an access function in a use function.**

In some embodiments, the first function is a file access function. The first media file is a photo. Indication information of the first media file includes one or more of the following: a file name, a file owner, a file storage path, a photo access permission, and a photo access manner. Interface indication information indicates a capability for storing the first media data in the third capability.

The first application may be the gallery application. The first function is an access function. The first media file includes one or more of the following: a big picture and a thumbnail. Processing performed by the first function on the first media data includes storage.

As shown in FIG. 6, after the gallery application detects an operation of accessing an image by a user, the gallery application may invoke a photo access function PhotosMode interface. A parameter transferred by the PhotosMode interface includes DeviceName, AppName, key1, value1, key2, value2, and extend.

For specific descriptions of the parameter transferred by the PhotosMode interface, refer to the related content in FIG. 5. Details are not described herein again.

After the camera application invokes the PhotosMode interface, the PhotosMode interface invokes MediaDataKit. A parameter transferred by MediaDataKit includes Storage, PhotosMode, [BigPicture, ...], and extend. The transferred parameter may further include a file owner, a file storage path, a file size, and the like. This is not specifically limited in embodiments of this application.

Storage indicates a storage interface, PhotosMode is a to-be-started function point, BigPicture is a big picture, and BigPicture is a big picture accessed by the gallery application in a big picture access manner this time.

After the PhotosMode interface invokes MediaDataKit, MediaDataKit may determine, based on the parameter Storage transferred by MediaDataKit, that an interface to be invoked is a storage capability. A parameter transferred by the storing capability may include PhotosMode, [BigPicture, ...], and extend.

Then, in a running process of the storage capability, one or more of the generation service capability, the use service capability, the storage service capability, the elimination service capability, the space management service capability, or others may be invoked to access a photo. For example, the use service capability may be invoked to determine whether the first application meets an access permission for the first media file. If the first application does not meet the access permission for the first media file, the storage capability fails to run, and a result indicating that the file access function fails to be enabled is returned. If the first application does not meet the access permission for the first media file, the storage capability continues to be run to complete the file access function.

**For example, the first application invokes a playing function in a use function.**

In some embodiments, the first function is a file playing function. The first media file is an audio or a video. Indication information of the first media file includes one or more of the following: a file name, a file owner, a file size, a playing manner, and playing duration. Interface indication information indicates a capability for playing the first media data in the third capability.

The first application may be a music application or a video application. When the first function is the playing function and the first media file is music, processing performed by the first function on the first media file may include playing.

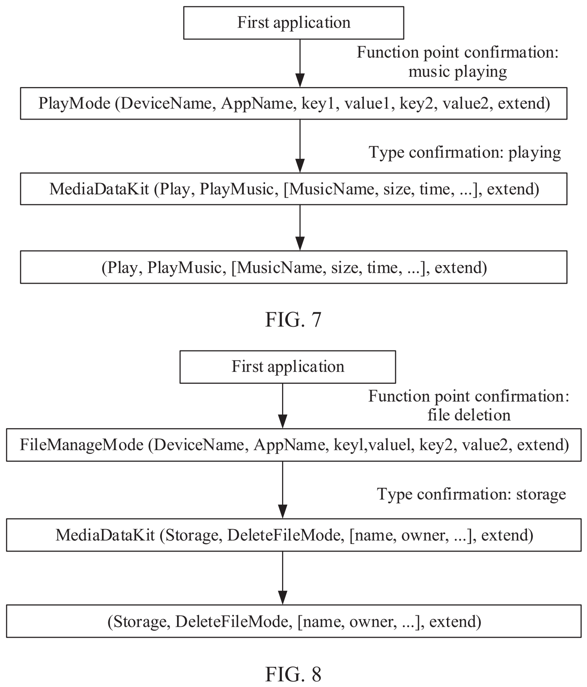

As shown in FIG. 7, after the music application detects an operation of playing music by a user, the music application may invoke a PlayMode interface. After the music application invokes the PlayMode interface, the PlayMode interface invokes MediaDataKit. A parameter transferred by MediaDataKit includes Play, PlayMusic, [MusicName, size, time, ...], and extend.

Play indicates a play interface to be invoked by MediaDataKit, PlayMusic is a to-be-started function point, and [MusicName, size, time, ...] indicates music that needs to be played this time, where MusicName is a music name, size is a music size, and time is music duration. The transferred parameter may further include a file owner, a file storage path, a playing manner, and the like. This is not specifically limited in embodiments of this application.

After the PlayMode interface invokes MediaDataKit, MediaDataKit invokes the play interface. A parameter transferred by the play interface includes PlayMusic, [MusicName, size, time, ...], and extend.

Then, in a running process of a playing capability, one or more of the generation service capability, the use service capability, the storage service capability, the elimination service capability, the space management service capability, or others may be invoked to play music.

**For example, the first application invokes a deletion function in an elimination function.**

In some embodiments, the first function is a file deletion function. Indication information of the first media file includes one or more of the following: a file name, a file owner, a file storage path, a file size, and a file deletion manner. Interface indication information indicates a capability for storing the first media file in the third capability.

As shown in FIG. 8, the first application may be a storage application like Gallery or File manager. After the storage application detects an operation of deleting a file by a user, the storage application may invoke a FileManageMode interface. Then, the FileManageMode interface invokes MediaDataKit. A parameter transferred by MediaDataKit includes Storage, DeleteFileMode, [name, owner, ...], and extend.

Storage indicates a storage interface to be invoked by MediaDataKit, DeleteFileMode is a to-be-started function point, and [name, owner, ...] indicates a file that is deleted this time, where name is a file name, and owner is a file owner. The transferred parameter may further include a file storage path, a file size, a file deletion manner, and the like. This is not specifically limited in embodiments of this application.

After the FileManageMode interface invokes MediaDataKit, MediaDataKit invokes a storage interface. A parameter transferred by the storage interface includes DeleteFileMode, [name, owner, ...], and extend.

Then, in a running process of a storage capability, one or more of the generation service capability, the use service capability, the storage service capability, the elimination service capability, the space management service capability, or others may be invoked to delete the first media file.

**For example, the first application invokes a restoration function in an elimination function.**

In some embodiments, the first function is a file restoration function. Indication information of the first media file includes one or more of the following: a file name, a file owner, a restorable file size, and restorable content. Interface indication information indicates a capability for storing the first media file in the third capability.

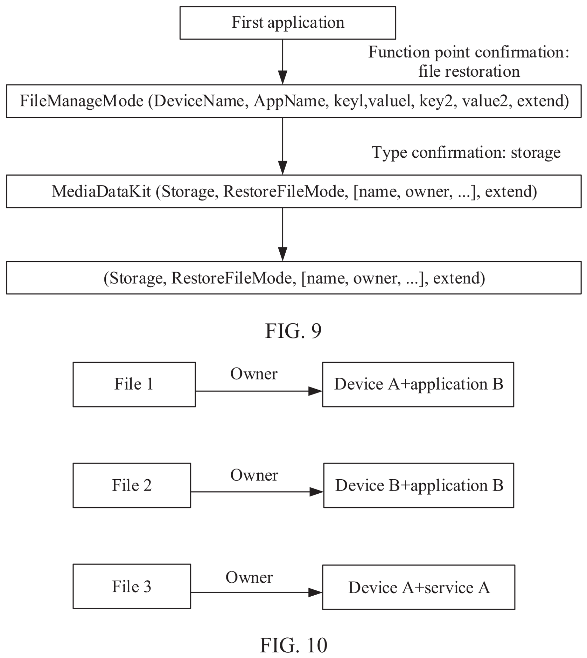

As shown in FIG. 9, the first application may be a storage application like Recycle bin. After the storage application detects a file restoration operation of a user, the storage application may invoke a FileManageMode interface. Then, the FileManageMode interface invokes MediaDataKit. A parameter transferred by MediaDataKit includes Storage, RestoreFileMode, [name, owner, ...], and extend.

Storage indicates a storage interface to be invoked by MediaDataKit, RestoreFileMode is a to-be-started function point, and [name, owner, ...] indicates a file to be restored this time, where name is a file name, and owner is a file owner. The transferred parameter may further include a restorable file size, restorable content, and the like. This is not specifically limited in embodiments of this application.

After the FileManageMode interface invokes MediaDataKit, MediaDataKit invokes a storage interface. A parameter transferred by the storage interface includes RestoreFileMode, [name, owner, ...], and extend.

Then, in a running process of a storage capability, one or more of the generation service capability, the use service capability, the storage service capability, the elimination service capability, the space management service capability, or others may be invoked to delete the first media file.

It may be understood that, for a manner of invoking another related function interface, refer to related descriptions of the embodiments shown in FIG. 5 to FIG. 9. Details are not described again in embodiments of this application.

Based on the foregoing invoking relationships between different interfaces, the following describes file processing implementation based on third capabilities in different application scenarios with reference to the OS of the electronic device provided in the embodiment shown in FIG. 2. The file mentioned in this embodiment of this application may be understood as the media file mentioned in the foregoing embodiment.

### File generation

Each application may create a file, use a file, delete a file, and the like in a running process. However, in this embodiment of this application, a file creation procedure of each application may be managed and controlled in a standard manner based on a generation capability of the OS. For example, when an application enables a file creation function, an input parameter of a file creation function interface includes file owner (owner) information, and the file owner indicates a file source, so that problems such as unclear sources and disordered storage of files can be resolved from a source.

That is, when creating a file, the electronic device may determine, based on a parameter input by the first application, one or more of the file owner (owner), the file name, the file permission, the file storage path, the file size, the file type, and the like of the first media file. The file owner (owner), the file permission, and the file storage path can better assist a unified media framework in performing standard management on the file.

The file owner is used to record an application that creates the file. In a multi-device interconnection scenario, a device on which the application is located when the file is created may be further recorded. The file owner includes application identification information of the application that creates the file, and a device identifier of the device to which the application belongs when the file is created, for example, a first application identifier and a first electronic device identifier. It should be noted that the first application may be a system application or a third-party application running on the electronic device, or may be an application service or a system service running on the electronic device, for example, a mini program service that is on the electronic device and that depends on a system platform, and various mini program services that depend on a third-party application platform (for example, Alipay and WeChat). This is not specifically limited in embodiments of this application.

Refer to FIG. 10. FIG. 10 is a diagram of a file owner according to an embodiment of this application. As shown in FIG. 10, when a file is created, a unique file owner of the file is standardized. For example, if a file 1 is created by an application B on a device A, an owner of the file 1 is (the device A+the application B). If a file 2 is created by an application B on a device B, an owner of the file 2 is (the device B+the application B). It can be learned from this that, even if both the file 1 and the file 2 are created by the application B, the electronic device can quickly distinguish file sources based on only owner information. For another example, if a file 3 is created by a service A on a device A, an owner of the file 3 is (the device A+the service A). It can be learned from this that, even if both the file 1 and the file 3 are created on the device A, the electronic device can also quickly distinguish file sources based on only owner information.

Owners of all files on the electronic device are standardized during creation, and the owners are used as input parameters to invoke different file processing functions in entire file life-cycles. This facilitates source tracing when the unified media framework processes the files, and directly avoids a problem that sources of file creation are unclear in the unified media framework. In addition, an owner may also be used as a cache record, and an operation of generating a file in an application may be recorded in a cache of the application, to facilitate system-level security control. In this way, generation of all the files is traceable. When it is detected that an ownership of a file is unclear, it is also possible to trace back to an unauthorized application, so that the electronic device deletes the application. For example, if a permission for the file created by the application can be shared with another application, after the application is deleted, all related files need to be deleted. In this case, the files on the electronic device can be completely cleared by traversing the owners of the files. A backup scenario is similar, and application-level management and control can be implemented.

In some embodiments, the file storage path may be a relative path or an absolute path of a file storage location, and indicates a storage location of a file on the electronic device. Files with a same file owner on the first electronic device are created and stored in a same root folder in sequence.

It may be understood that the application can create, on the first electronic device, only one folder whose name is a name of the application, and all subsequent files or folders can be created only in the root folder directory. In addition, the files in the root directory may be classified or sorted based on an attribute like creation time, a file name, and a file size. In this manner, the electronic device can easily manage, based on an owner, a file created by each application, and a quantity of top-level root folders is greatly controlled. A form of a file in each root folder can be deduced based on this requirement. When there are too many root folders, a space management capability may be periodically invoked to perform clustering optimization on the root folders, to reduce a quantity of root files. It may be further understood that determining of the file storage location may be further managed and controlled by using the space management capability. This is not specifically limited in embodiments of this application.

In some embodiments, the file permission may be used to record a use permission for creating the file, and the use permission may include an access permission, a playing permission, an editing permission, and a sharing permission. Each type of permission may be refined into different types of permissions based on a folder type, an application type, and a file type. This is not specifically limited in embodiments of this application.

Therefore, creation of a service management file and setting of owner information of the file can avoid a problem that a source of a file is unknown on the electronic device, a problem of a disordered file storage directory can be avoided by standardizing a file storage location, and a problem that an excessive permission is required for file processing of a file can be resolved by restricting a use permission for the file, to implement standardized, unified, and convenient management and control on files.

### File use

A use service can be used to manage use of a file, and manage and control a use permission for the first media file, or determines, based on a use manner corresponding to a parameter input by the first application, whether a first application meets the use permission for the first media file, and returns a use result. The use permission includes one or more of the following: an access permission, a playing permission, an editing permission, a sharing permission, and the like.

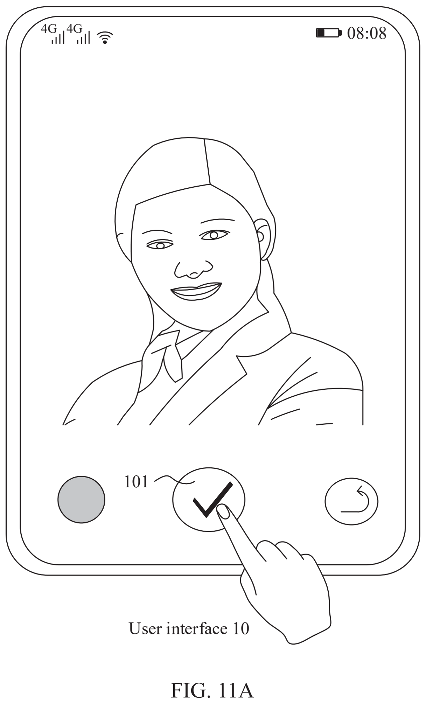

An example in which the first application, a second application, and a third application that have different permissions after the second application creates a file separately access the file is used to describe use of the file. Refer to FIG. 11A to FIG. 11D, FIG. 11A to FIG. 11D are diagrams of a group of user interface according to an embodiment of this application.

FIG. 11A shows an example of a user interface 10 displayed when the electronic device 100 runs the second application. The second application is an application that can invoke a photographing function, for example, Camera, BeautyCam, WeChat, or Taobao. The user interface 10 may be a photo preview page after the second application photographs a photo. After the second application photographs a photo, the photographed photo can be previewed, so that the user determines whether to save the currently photographed photo. The user taps a photo saving option 101. The photo saving option 101 may enable a file creation function, to complete creation of the photo. In this case, the second application and a system application may be set to have an access permission for the photo that is successfully created, and another third-party application does not have the access permission.

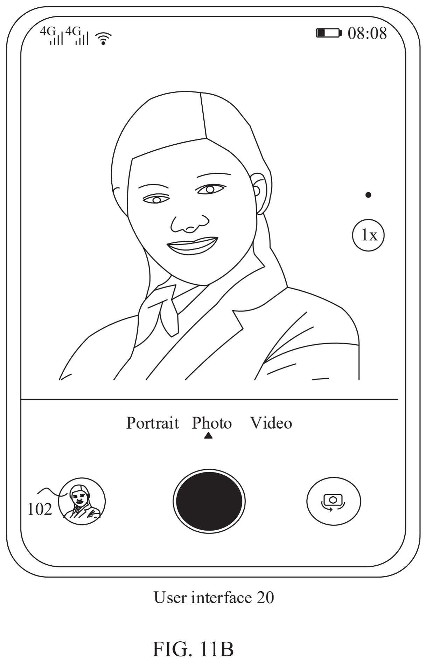

FIG. 11B shows an example of a user interface 20 displayed by the second application after the photo creation function is completed. A photo access option 102 on the user interface 10 is a thumbnail of the created photo. The user may tap the photo access option 102, and the OS may enable a file access function, so that the user can access the currently photographed photo.

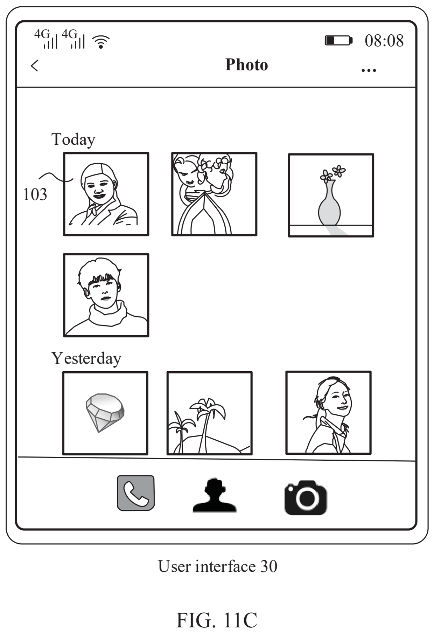

FIG. 11C shows an example of a user interface 30 displayed by the electronic device 100 when the electronic device 100 runs the first application. The first application may be a gallery application. The user interface 10 may be a preview page of the first application. The preview page of the first application may be used to display photos created after various photographing applications perform photographing, for example, a photo 103 created by the second application. The user may tap the photo 103 to enable the file access function to access the photo created by the second application.

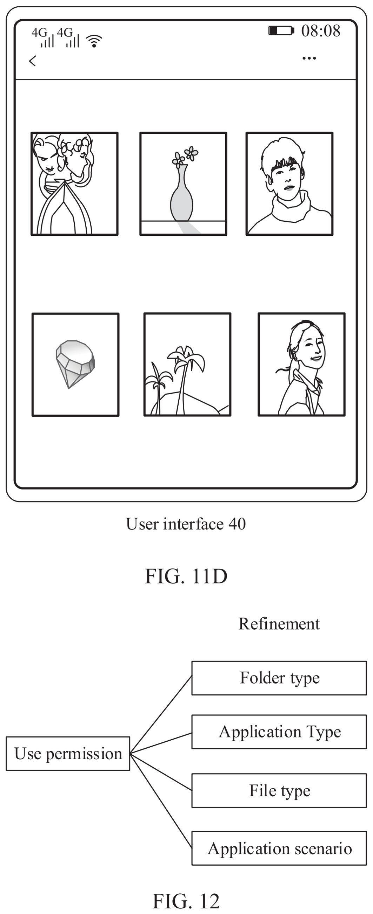

FIG. 11D shows an example of a user interface 40 displayed by the electronic device 100 when the electronic device 100 runs the third application. The third application may be a third application. The user interface 10 may be a preview page of Gallery invoked by the third-party application. Because the third-party application does not have a permission to access the photo 103 created by the second application, when the third-party application invokes the preview page of Gallery, the photo 103 created by the second application in FIG. 11C does not exist in photos that can be accessed by the third-party application.

It may be understood that, when creating the file, a first operating system may determine the use permission for the file by using a capability, to manage and control the file when another application subsequently performs operations such as access, playing, editing, and sharing on the file. The use permission may include the access permission, the playing permission, the editing permission, and the sharing permission. Refer to FIG. 12. FIG. 12 is a diagram of refining of the use permission according to an embodiment of this application. As shown in FIG. 12, each different use permission may be refined into different types of permissions based on a folder type, an application type, a file type, an application scenario, or the like. For example, the sharing permission may be used for sharing based on different application types, and the playing permission may include high-resolution play, low-resolution play, and the like. For another example, the access permission may be used for access in different application scenarios.

It should be further noted that, the use capability may further determine, based on the use manner corresponding to the parameter input by the first application, whether the first application meets the use permission for the first media file, and return the corresponding use result. After the first application enables a first function for the first media file, if the use capability determines the use manner corresponding to the input parameter meets the use permission of the first application for the first media file, the electronic device may complete the first function. If the use capability determines the use manner corresponding to the input parameter does not meet the use permission of the first application for the first media file, the electronic device may return a result indicating that the first function fails to be enabled, or the electronic device may apply to the second application for the use permission of the first application, to complete the first function. It may be understood that the use manner may be accessing in a form of thumbnail, preview, big picture, or the like. For example, the use manner corresponding to the parameter input by the first application is accessing, in a big picture manner, the first media file created by the second application, but the first application accesses the first media file only in a preview manner.

**In** some other embodiments, the use capability may further set a use permission corresponding to an application. For example, a file management application may have access permissions for all files, and a third-party application has access permissions for only some files, for example, has only an access permission of a photo in Gallery, but does not have an access permission of an audio.

Therefore, even if each application of the current electronic device can access an internal card, the application cannot randomly create or modify a file in the internal card. For example, a file created by an application cannot be randomly accessed, modified, or shared by another application that does not meet a permission. The electronic device manages and controls a permission of each application, to improve file use efficiency, and implements standardized, unified, and convenient management and control on files through permission management, type management, result management, and the like.

In addition, the use capability may further support file search on the electronic device. For example, quick query and search are performed based on some existing parameters such as a file owner, a file name, file time, a file location, and main content of a file. This is not specifically limited in embodiments of this application.

### File storage

The storage service may be used to store the first media file in a corresponding storage location based on a parameter input by the first application, and return a storage result, or back up or migrate the first media file, to support device-device collaboration and device-cloud collaboration.

It may be understood that, when a file is created, after the space management service determines a storage location of the first media file, the storage service may store the first media file based on a storage path corresponding to the storage location.

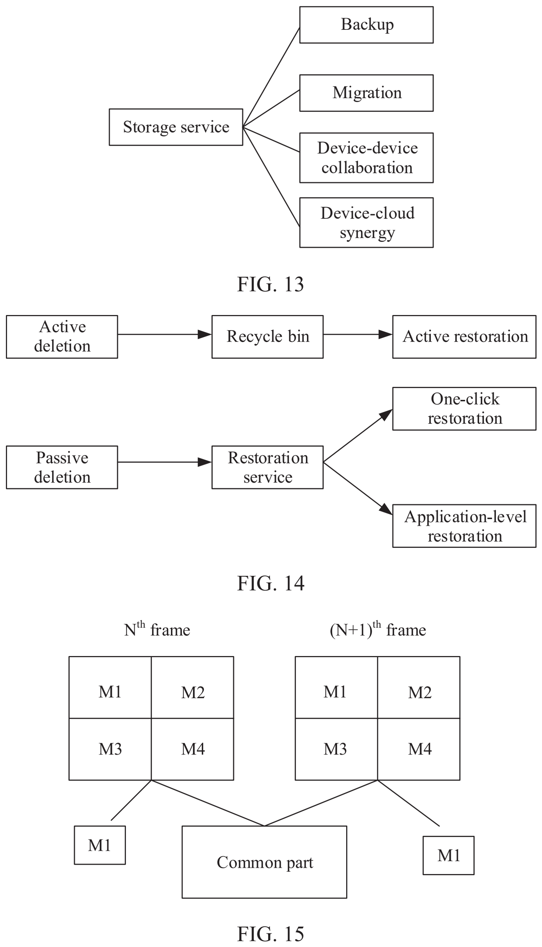

In addition, refer to FIG. 13. FIG. 13 is a diagram of a capability supported by the storage service according to an embodiment of this application. As shown in FIG. 13, the storage service mainly supports file backup, file migration, device-device collaboration, device-cloud collaboration, and the like. The storage service may provide a unified registration capability for backup and migration. In other words, only a file created by an application that has been registered with the storage service can be backed up or migrated. Other applications cannot perform backup or migration.

Correspondingly, in use of backup and migration, the application may determine files that can be backed up or migrated, so that the electronic device manages a file more refined, for example, may manage the file based on a file type or a folder. A specification may be customized.

For example, in a multi-device joint scenario, storage in a current device (including a local device and a distributed device), storage in a cloud server, and home storage (storage hard disk) may be jointly performed, to ensure full collaborative utilization of storage space. Generally, whether a file is stored on a corresponding device may be determined based on a storage parameter of the file. The storage parameter may include a file storage location, a file storage size, a file name, a file storage path, and the like. If a value corresponding to the file storage location on the device is not -1, it may indicate that the file is stored on the device.

Further, because any application may apply for a permission of a memory to randomly create a file, a large quantity of junk files exist on the electronic device, and the user cannot sense sources and does not know owners of the files. In addition, a file storage directory is disordered, and the user usually finds various photo files with unknown sources in Gallery.

In contrast, the OS in this embodiment of this application may provide a unified file creation capability, so that a file created by each application complies with a unified specification, and management is performed conveniently.

### File elimination

The elimination service capability may be used to delete the first media file or restore the first media file based on the parameter input by the first application. For example, the elimination service capability may be used to delete the first media file in a complete deletion manner based on the parameter input by the first application. In this manner, the deleted file cannot be restored. Alternatively, the first media file may be deleted in a restorable deletion manner based on the parameter input by the first application. In this manner, the deleted file can be restored. Alternatively, the first media file may be deleted in a comprehensive deletion manner based on the parameter input by the first application. In this manner, all files obtained through backup and copying by applications for the file can be deleted. For example, after a photo A is deleted from Gallery, the photo A in a WeChat chat record is also deleted.

It should be noted that, in some other embodiments, when creating a file, an application may further set a related parameter of a deletion manner of the file. For example, when the application invokes a file creation function, indication information of the first media file may transfer, for example, a parameter that supports the file deletion manner, or the first operating system determines the deletion manner supported by the file. For example, if the deletion manner of the file is set to support restorable deletion when the file creation function is invoked, the file can be deleted in the restorable deletion manner when the file deletion function is invoked. If the deletion manner of the file is set to not support restorable deletion when the file creation function is invoked, the file cannot be deleted in the restorable deletion manner when the file deletion function is invoked.

In some embodiments, if the file is deleted in the restorable deletion manner, when the application invokes a file restoration function, file indication information may transfer one or more of the following parameters: a file name, a file owner, a restorable file size, restorable content, and the like. The restorable file size is a size of the file that can be restored after the file is deleted, and may also be used as a basis for complete restoration. It may be understood that, if the file is damaged in a deletion process, the restorable file size is less than a size of the original file, that is, it indicates that only a part of the file can be restored. The restorable content is cached content of the file, namely, content restored to a real file.

In addition, it may be understood that, different types of deletion manners of the file may be classified into active deletion and passive deletion. Refer to FIG. 14. FIG. 14 is a diagram of restoration procedures corresponding to different deletion manners according to an embodiment of this application.

As shown in FIG. 14, the elimination service may be classified into active deletion and passive deletion. Active deletion is a file deletion behavior initiated by the user, for example, deleting an unsatisfactory photo from Gallery. Passive deletion is mainly some system behaviors, or may be some misoperations. For example, a file is deleted due to repetition based on a concept of space management. During file clustering optimization, a file is deleted because the file is invalid, and a file is deleted because the file is abnormal and empty. This is not specifically limited in embodiments of this application.

Therefore, for different deletion manners, the elimination service may correspondingly provide different restoration methods. A recycle bin application or system may invoke a restoration service, and perform restoration based on a capability provided by the restoration service. In this case, active restoration may be performed for a specific deleted file, or some files cached in the current restoration service may be integrally restored, which is one-click restoration, or partial restoration may be performed based on file owner information of deleted files, which is application-level restoration, or the like. A deletion manner and a restoration manner are not specifically limited in embodiments of this application.

### File space management

The space management capability may be used to perform one or more of the following: managing storage space for the first media file, setting a storage location of the first media file in the storage space, and when free storage space in the storage space is less than a preset threshold, deduplicating or compressing a file stored in the storage space.

The storage space for the file may include at least one of the following spaces: storage of local storage space (for example, local device storage and distributed device storage), cloud storage space (for example, cloud server storage), and peripheral storage space (for example, storage hard disk).

The space management capability may be used to store, based on storage priorities, files in corresponding storage space according to different storage priority rules. Priority classification of file access efficiency is as follows: The local storage space has a higher priority than the peripheral storage space, and the peripheral storage space has a higher priority than the cloud storage space. In terms of a storage space usage requirement, the cloud storage space has a higher priority than the peripheral storage space, and the peripheral storage space has a higher priority than the local storage space. Specifically, specific division of storage priorities of storage space is not limited in embodiments of this application.

It may be understood that, because a file may be classified into hot data and cold data, a file whose use frequency exceeds a preset threshold is a hot data file, and a file whose use frequency does not exceed the preset threshold is a cold data file. Access efficiency should be considered first for the hot data, so the hot data should be stored on a local device. Space usage should be considered first for the cold data, so the cold data should be stored in cloud space.

In addition, in some other embodiments, the space management capability may further be used to deduplicate or compress the file stored in the storage space when the free storage space in the storage space is less than the preset threshold. Deduplication means removing a duplicate file, and compression means compressing a file.

For example, if there are two completely same files on the electronic device, for example, a file 1 and a plurality of copies of the file 1, when the remaining free storage space in the storage space is less than the preset threshold, the plurality of copy files may be deleted, and only one file is reserved. For another example, when a file 1 already exists on the electronic device, the space management capability may be used to manage and control an application to avoid repeatedly creating the file 1, and the currently stored file 1 may be directly used, to ensure efficient utilization of the storage space.

For example, in a media file, there may be a large quantity of similar blocks or similar frames in both a photo and a video. In this case, the space management capability may be used to compress an existing photo or video to reduce an overall file size on the electronic device.

For example, refer to FIG. 15. FIG. 15 is a diagram of compression according to an embodiment of this application. As shown in FIG. 15, for a video file, there are two adjacent similar photo files, namely, an N^{th} frame and an (N+1)^{th} frame. Each of the two frames of photo are divided into four parts. Same parts M2, M3, and M4 may be reused, and different parts M1 cannot be reused. Therefore, for the foregoing two frames, the reused part may include six small parts, and the difference part may include two parts. Originally, eight small parts of space need to be occupied, and now only eight parts of space need to be occupied. Currently, this is only a case of two frames. If a quantity of frames increases, a common part may become smaller. Therefore, a dynamic parameter value A may be set, and the value is a quantity of frames obtained through compression. For example, when the value is 5, five frames are placed together for compression and calculation. A dynamic parameter B may be further set, where a value of B indicates a quantity of blocks into which each frame is divided. For example, B=20 indicates that a current frame is divided into 20 same modules. A larger value indicates finer division and a better compression effect.

Therefore, it may be understood that the foregoing video compression manner may be understood as that similar data exists between a plurality of adjacent frames of images, so that the plurality of frames of images may be normalized, to reduce storage space for the video. In some embodiments, the space management capability may be further used to compress each frame of image in the video, to reduce overall storage space for the video. For example, the space management capability may be used to directly perform intra-frame compression on each frame of image in the video, that is, information about a pixel in each frame of compressed image may be obtained by performing interpolation on information about adjacent pixels. Therefore, when an image is compressed, only information about some pixels is reserved, to obtain a compressed image, so as to reduce a size of the overall storage space for the video.

In some other embodiments, to ensure video playing quality, different compression manners may be further performed in different areas of each frame of image in the video. For the video, each frame of image may be divided into a key area and a non-key area. The key area may be a photo area that the user pays more attention to, for example, a person or a dynamic object. The non-key area may be a photo area that the user does not pay much attention to, for example, a background or a static object. The space management capability may be used to perform compression in different manners for the non-key area and the key area of each frame. For example, the non-key area is compressed in an intra-frame compression manner or a residual compression manner, the key area is compressed in a regular inter-frame compression manner, and the like.

Therefore, it should be noted that a manner of compressing a file like a photo or a video by using the space management capability in this embodiment of this application is not specifically limited. The space management capability may adaptively select different compression manners based on a size of the remaining storage space, a compression manner supported by the electronic device, a file use manner, a file compression type, or the like, to ensure more proper use of storage space without affecting use by the user.

It may be further understood that a compression triggering mechanism in the space management service may be dynamic, so that the user can have optimal experience, and storage space of the device can be fully used. For example, compression is performed when a storage application invokes the space management function, or compression may be performed when the free storage space in the storage space is less than the preset threshold, to ensure proper use of the storage space. This is not specifically limited in embodiments of this application.

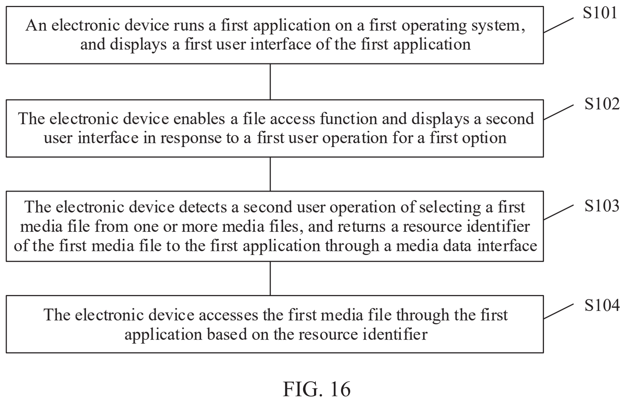

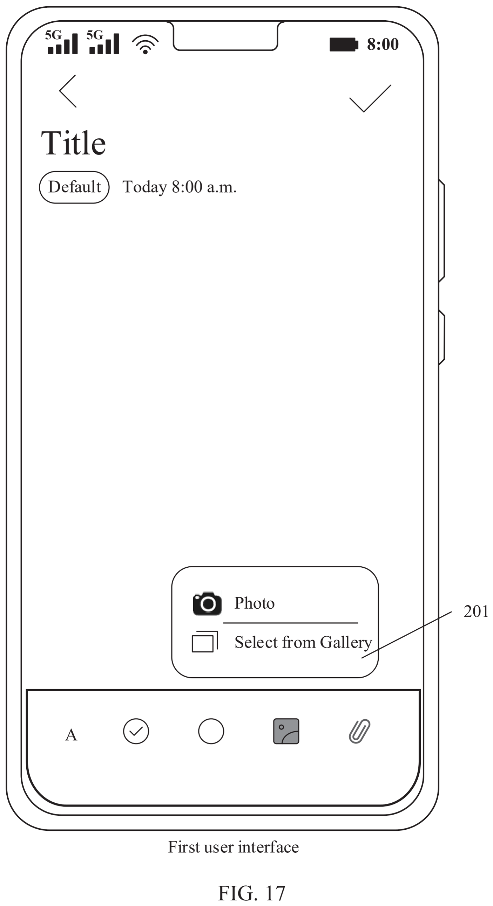

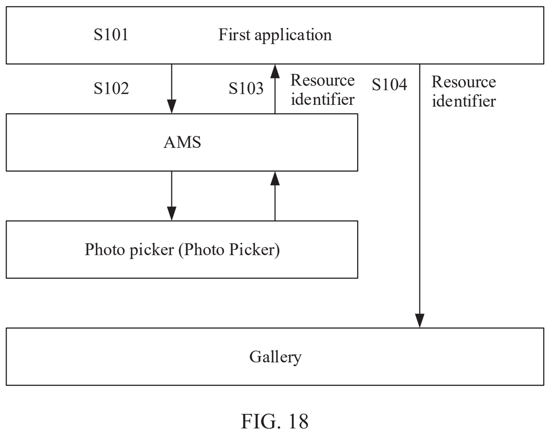

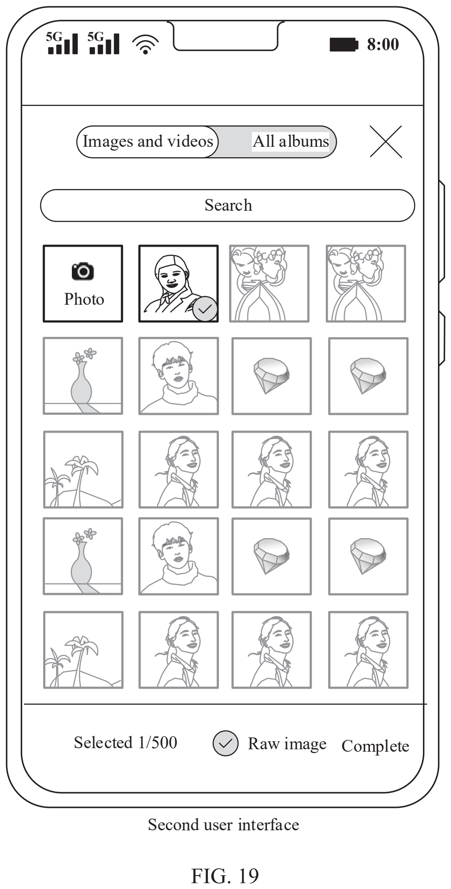

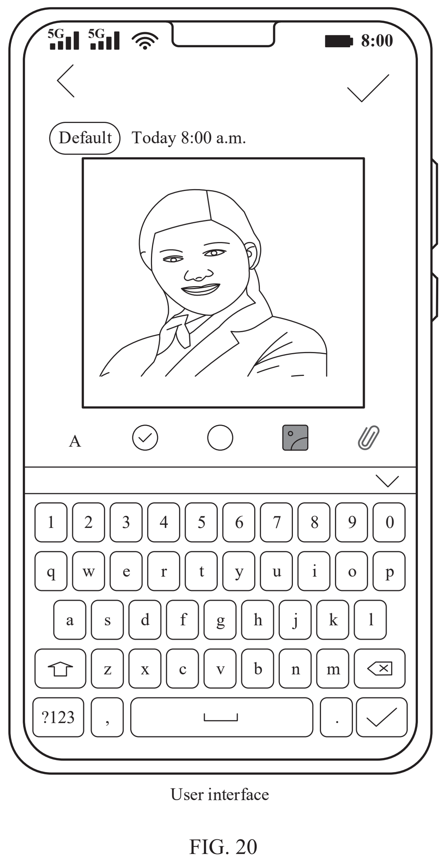

The following describes, by using examples, a procedure of the file management method provided in embodiments of this application based on the functional modules in the software structure diagram shown in FIG. 2 or FIG. 3 and the implementation of file management. Refer to FIG. 16 to FIG. 20. FIG. 16 is a schematic flowchart of a file management method according to an embodiment of this application. FIG. 17 is a diagram of a user interface according to an embodiment of this application. FIG. 18 is a diagram of an interface invoking relationship when a file access function is enabled according to an embodiment of this application. FIG. 19 and FIG. 20 are diagrams of another group of user interfaces according to embodiments of this application.

As shown in FIG. 16, the data management method mainly includes the following steps.

S101: An electronic device runs a first application on a first operating system, and displays a first user interface of the first application.

Specifically, the electronic device runs the first operating system, the first application is installed on the first operating system, and the first operating system provides a first interface, a media data interface, and a second capability. A first option corresponding to a first function is presented on the first user interface displayed by the first application.

The first application may be a third-party application, a system application, a self-developed application, or the like. The first application includes program code for invoking the first interface, and the first interface is used to enable the first function provided by the first application. For example, the first application may be a camera application, a gallery application, a music application, a video application, a file manager application, or the like.

The first function may be a generation function, a use function, a storage function, an elimination function, a space management function, or the like. For example, if the first function is a generation function, the user interface of the first application may be a photographing and saving interface, a first option may be a photo saving option, a first media file may include a photo, and the first function may include storage of the photo. In some embodiments, the first function further includes at least one of the following functions: a file creation function, a file playing function, a file deletion function, a file restoration function, a file backup function, a file migration function, a file sharing function, and a file space management function.

The first interface may be configured to enable the first function provided by the first application, and the first interface may be configured to invoke the media data interface. In this embodiment of this application, the first operating system may provide a plurality of first interfaces, and different first interfaces may be configured to enable different functions.

The media data interface is used to invoke a second capability, and the second capability includes a capability for performing one or more of the following processing on a media file: managing creation of the first media file, managing use of the first media file, storing the first media file, managing deletion and restoration of the first media file, and managing storage space for the first media file. The first media file may include one or more of the following types: a text, a photo, a video, an audio, and the like. For details about the first operating system, refer to the descriptions of related content in the foregoing embodiments.

As shown in FIG. 17, the first application may be Memo, the first function may include a file access function, and the first user interface of the first application may include an option 201 for the file access function.

The first interface may be an AMS interface mentioned in FIG. 18. The media data interface may be a photo picker (Photo Picker) mentioned in FIG. 18.

In addition, the first interface may be one or more of the camera function interface, the editing function interface, the storage function interface, the sharing function interface, the file management function interface, and the playing function interface mentioned in the foregoing embodiment. The media data interface may alternatively be the MediaDataKit interface mentioned in the foregoing embodiments.

S102: The electronic device enables the file access function and displays a second user interface in response to a first user operation for the first option.

Specifically, the first user operation for the first option may be used to trigger enabling of the first function, namely, the file access function, and displaying of the second user interface. As shown in FIG. 19, after a user taps the option 201 of the file access function on the first user interface shown in FIG. 17, for example, taps a photo selected from Gallery, the file access function may be enabled and the second user interface shown in FIG. 19 may be displayed. The second user interface may include one or more media files.

In addition, the first user operation may be a touch operation performed on a touchscreen, or may be a voice instruction of the user, or the like. A form of the operation is not limited in embodiments of this application.

It may be understood that, as shown in FIG. 18, after the first user operation for the first option is received, an AMS interface (namely, the first interface mentioned above) may be invoked in response to the first user operation for the first option, and the AMS interface may further invoke the photo picker (Photo Picker) to enable the file access function.

A parameter input when the AMS interface is invoked may include one or more of the following: a device name, an application name of the first application, and a parameter input by the first application. The parameter input by the first application includes a parameter indicating the first function and parameter content. The parameter content includes one or more of the following: description information of the first function, the first media file, and indication information of the first media file. For details about the input parameter, refer to the descriptions of related content in the foregoing embodiments.

The photo picker (Photo Picker), namely, a media data interface, may be encapsulated with a third capability. The third capability includes a capability for performing one or more of the following processing on the first media file: acquisition, encoding, storage, sharing, decoding, and playing. A parameter input when the photo picker (Photo Picker) is invoked may include interface indication information, indication information of the first function, and the first media file or the indication information of the first media file. The interface indication information indicates a capability invoked by the media data interface in the third capability. The indication information of the first media file is all or a part of parameters input by the first application, and/or the indication information of the first media file is determined by the first operating system.

It may be further understood that, in addition to enabling a function by performing an operation on an option, when the electronic device 100 does not display a photo or does not display an option on the first user interface of the first application, the function is enabled based on a voice instruction of the user or an operation performed on a physical button. For example, when the electronic device 100 does not display a photo, the electronic device 100 may detect a voice instruction "photograph" of the user, and enable a photo creation function of the camera application, where the photo creation function may be used to store a picture flow. For another example, when an option is not displayed on the first user interface of the first application, if the first application may identify, based on information entered by the user on the first user interface, a file access function for a photo photographed at 5 o'clock today, the first application may directly invoke the AMS interface to enable the access function to access the photo.

S103: The electronic device detects a second user operation of selecting the first media file from one or more media files, and returns a resource identifier of the first media file to the first application through the media data interface.

Specifically, the electronic device detects the second user operation of selecting the first media file from the one or more media files, and may return the resource identifier of the first media file to the first application through the media data interface. As shown in FIG. 18, after the electronic device 100 enables the file access function (namely, the first function), the electronic device 100 invokes the AMS interface (namely, the first interface) through the first application, then invokes the photo picker (Photo Picker) (namely, the media data interface) through the AMS interface, and then invokes the third capability through the media data interface, to obtain the resource identifier of the first media file and return the resource identifier to the first application. The resource identifier may be a uniform resource identifier (Uniform Resource Identifier, URI) used to determine a location of the first media file. In addition, the resource identifier may further indicate a storage location of the first media file.

The parameter input by the photo picker (Photo Picker) may include one or more of the following: the interface indication information, the indication information of the first function, and the first media file or the indication information of the first media file. The indication information of the first media file may include all or a part of parameters input by the first application, and/or a parameter determined by the first operating system. The interface indication information may indicate a capability invoked by the media data interface in the third capability, and the interface indication information may be determined based on the first function.

In some other embodiments, before returning the resource identifier of the first media file through the media data interface, it is also necessary to grant a temporary access permission for the first application to complete the file access function for the first media file. That is, when the access permission for the first media file is not granted for the first application, the first application needs to be authorized to access the first media file through the media data interface. The media data interface, namely, the photo picker (Photo Picker), may perform authorization, or the first interface, namely, the AMS interface, may perform authorization. This is not specifically limited in embodiments of this application.

It should be noted that, granting the temporary access permission for the first application to complete the file access function for the first media file may mean returning a resource identifier with a temporary permission to the first application, so that the first application accesses the first media file based on the resource identifier with the temporary permission. A form of authorization is not specifically limited in embodiments of this application.

It may be understood that after querying the user or the application that creates the first media file for authorization, the media data interface may temporarily authorize the first application to access the first media file. It may be further understood that the first application that obtains the temporary access permission can access the first media file only within a validity period or a quantity of valid times of temporary authorization, and cannot access the first media file after the temporary access permission expires.

S104: The electronic device accesses the first media file through the first application based on the resource identifier.

Specifically, the first application on the electronic device may access the first media file based on the resource identifier. As shown in FIG. 20, after the user selects the first media file from the one or more media files, the first application may access and obtain the first media file based on the returned resource identifier, and may further display the first media file on the user interface of the first application.

For another example, the first application on the electronic device may access the first media file based on the resource identifier with the temporary permission.

In some embodiments, when the first application has an access permission for the first media file or obtains a temporary access permission for the first media file, the first media file is returned to the first application through the media data interface. In other words, in this case, the media data interface may directly determine, based on the input parameter, the first media file to be accessed by the first application, and when the first application meets the access permission for the first media file, the first media file may be directly returned to the first application through the media data interface, and the first application does not need to access the first media file based on the resource identifier.

In some other embodiments, when the first application does not obtain the access permission or the temporary access permission for the first media file, a result indicating that the file access function fails to be enabled is returned to the first application through the media data interface. For example, the first media file may be a media file created by a second application, and the second application does not grant the use permission for the first media file. The method further includes: returning, to the first application, the result indicating that the first function fails to be enabled; or querying the second application to obtain a permission of the first application to complete the first function for the first media file. After the first function is enabled, the electronic device may determine, based on the permission of the first application, whether the first function can be enabled for the first media file, and if the first function cannot be enabled for the first media file, return, to the first application, the result indicating that the first function fails to be enabled, or query the second application to obtain the temporary access permission of the first application to complete the file access function for the first media file, so that the first electronic device performs unified management on an entire file system. The second application may be an application on a first electronic device or a second electronic device. It may be understood that the second application and the first application may be devices that are communicatively connected to each other, or may be devices that are logged in to a same user electronic account.

In some embodiments, files with a same file owner on the first electronic device are stored in a same root folder in sequence. It can be learned that, in the method, the electronic device provides, by using a unified data management framework, a capability for performing unified processing on files of applications, so that the electronic device implements unified management on the files of the applications, and resolves a problem of a disordered file storage directory.

It should be understood that, for specific content and beneficial effects of the file management method provided in this embodiment of this application, refer to related descriptions in the foregoing embodiments. Details are not described herein again.

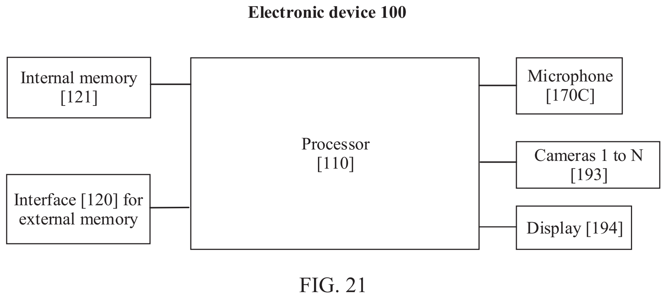

Next, the following describes a hardware structure of an electronic device in embodiments of this application. Refer to FIG. 21. FIG. 21 is a diagram of a structure of an electronic device according to an embodiment of this application.

FIG. 21 is a diagram of a hardware structure of an electronic device 100. The electronic device 100 may be the electronic device, the first electronic device, or the second electronic device mentioned above.

The electronic device 100 may be a mobile phone, a tablet computer, a desktop computer, a laptop computer, a handheld computer, a notebook computer, an ultra-mobile personal computer (ultra-mobile personal computer, UMPC), a netbook, a cellular phone, or a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device. A specific type of the electronic device is not limited in embodiments of this application.

As shown in FIG. 21, the electronic device may include a processor 110, an interface 120 for external memory, an internal memory 121, a microphone 170C, a camera 193, a display 194, and the like.

It may be understood that the structure shown in embodiments of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU)/ Different processing units may be independent devices, or may be integrated into one or more processors.

The controller may generate an operation control signal based on instruction operation code and a time sequence signal, to complete control of instruction fetching and instruction execution.

A memory may further be disposed in the processor 110, and is configured to store instructions and data. In some embodiments, the memory in the processor 110 is a cache memory. The memory may store an instruction or data that has been used or cyclically used by the processor 110. If the processor 110 needs to use the instructions or the data again, the processor may directly invoke the instructions or the data from the memory. This avoids repeated access and reduces waiting time of the processor 110, so that system efficiency is improved.

The electronic device 100 implements a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute instructions to generate or change display information.

The display 194 is configured to display an image, a video, and the like. The display 194 includes a display panel. The display panel may be a liquid crystal display (liquid crystal display, LCD). The display panel may alternatively be an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device may include one or N displays 194, where N is a positive integer greater than 1.

The electronic device 100 may implement a photographing function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, and brightness of the image. The ISP may further optimize parameters such as exposure and color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal. In addition to the digital image signal, the digital signal processor may further process another digital signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a function of transmission between human brain neurons, and may further continuously perform self-learning. The NPU can implement applications such as intelligent cognition of the electronic device 100, for example, image recognition, facial recognition, voice recognition, and text understanding.

The internal memory 121 may include one or more random access memories (random access memory, RAM) and one or more non-volatile memories (non-volatile memory, NVM).

The random access memory may include a static random access memory (static random access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, for example, a fifth generation DDR SDRAM generally referred to as DDR5 SDRAM), or the like. The nonvolatile memory may include a magnetic disk storage device and a flash memory (flash memory).

The flash memory may be classified into a NOR flash, a NAND flash, a 3D NAND flash, and the like according to an operation principle; may be classified into a single-level cell (single-level cell, SLC), a multi-level cell (multi-level cell, MLC), a triple-level cell (triple-level cell, TLC), a quad-level cell (quad-level cell, QLC), and the like based on a quantity of electric potential levels of a cell; or may be classified into a universal flash storage (English: universal flash storage, UFS), an embedded multimedia card (embedded multi media Card, eMMC), and the like according to storage specifications.

The random access memory may be directly read and written by the processor 110, may be configured to store executable programs (such as machine instructions) of an operating system or another running program, and may also be configured to store data of users and applications.

The non-volatile memory may also store the executable programs, the data of the user and the application, and the like, and may be loaded into the random access memory in advance, to be directly read and written by the processor 110.

The interface 120 for external memory may be configured to connect to an external non-volatile memory, to expand a storage capability of the electronic device 100. The external non-volatile memory communicates with the processor 110 through the interface 120 for external memory, to implement a data storage function. For example, a file such as music or a video is stored in the external nonvolatile memory.

The microphone 170C, also referred to as a "mike" or a "voice transmitter", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, so as to implement a directional recording function and the like.

In this embodiment of this application, the internal memory 121 is configured to store a computer program for implementing the photographing method provided in embodiments of this application. The processor 110 is configured to execute the computer program to implement the photographing method provided in embodiments of this application. For example, the processor 110 may successively generate a basic quality map and a full quality map in a segmented photographing procedure, and may be further configured to manage an input data flow and an output data flow of a pipeline, and the like.

It should be understood that the steps in the foregoing method embodiments may be completed by using an integrated logic circuit of hardware in the processor or instructions in a form of software. The steps of the method disclosed with reference to embodiments of this application may be directly performed by a hardware processor, or may be performed through a combination of hardware in the processor and a software module.

This application further provides an electronic device. A first operating system runs on the first electronic device, a first application is installed on the first operating system, and the first operating system provides a first interface, a media data interface, and a second capability. The first application includes program code for invoking the first interface, the first interface is used to enable a first function provided by the first application, the first interface is used to invoke the media data interface, and the media data interface is used to invoke the second capability. The second capability includes a capability for performing one or more of the following processing on the media file: managing creation of the media file, managing use of the media file, storing the media file, managing deletion and restoration of the media file, and managing storage space for the media file. The electronic device includes a memory, a processor, and a computer program stored in the memory, and the processor executes the computer program to implement the method performed by the electronic device as described in any one of the foregoing embodiments.

An embodiment of this application further provides a computer-readable storage medium. The computer program includes a first operating system, a first application is installed on the first operating system, and the first operating system provides a first interface, a media data interface, and a second capability. The first application includes program code for invoking the first interface, the first interface is used to enable a first function provided by the first application, the first interface is used to invoke the media data interface, and the media data interface is used to invoke the second capability. The second capability includes a capability for performing one or more of the following processing on the media file: managing creation of the media file, managing use of the media file, storing the media file, managing deletion and restoration of the media file, and managing storage space for the media file. When the computer program is executed by a processor, the steps of the method described in any one of the foregoing embodiments are implemented.

An embodiment of this application further provides a computer program product. The computer program product includes a computer program. The computer program includes a first operating system, a first application is installed on the first operating system, and the first operating system provides a first interface, a media data interface, and a second capability. The first application includes program code for invoking the first interface, the first interface is used to enable a first function provided by the first application, the first interface is used to invoke the media data interface, and the media data interface is used to invoke the second capability. The second capability includes a capability for performing one or more of the following processing on the media file: managing creation of the media file, managing use of the media file, storing the media file, managing deletion and restoration of the media file, and managing storage space for the media file. When the computer program is executed by a processor, the steps of the method described in any one of the foregoing embodiments are implemented.

It should be noted that, for brief description, the foregoing method embodiments are represented as a series of actions. However, persons skilled in the art should appreciate that this application is not limited to the described order of the actions, because according to this application, some steps may be performed in other orders or simultaneously. It should be further appreciated by a person skilled in the art that embodiments described in this specification all belong to example embodiments, and the involved actions and modules are not necessarily required by this application.

In the several embodiments provided in this application, it should be understood that the disclosed apparatus may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The foregoing units described as separate parts may or may not be physically separate, and parts displayed as units may or may not be physical units, may be located in one position, or may be distributed on a plurality of network units. Some or all of the units may be selected based on actual needs to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software function unit.

When the foregoing integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, a network device, or the like, and may specifically be a processor in the computer device) to perform all or some of the steps of the methods described in embodiments of this application. The foregoing storage medium includes any medium that can store program code, such as a USB flash drive, a removable hard disk, a magnetic disk, an optical disc, a read-only memory (Read-Only Memory, ROM for short), or a random access memory (Random Access Memory, RAM for short).

The foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application.

## Claims

1. A file management method, wherein the method is applied to a first electronic device, a first operating system runs on the first electronic device, a first application is installed on the first operating system, and the first operating system provides a first interface, a media data interface, and a second capability; the first application comprises program code for invoking the first interface, the first interface is used to enable a first function provided by the first application, the first interface is used to invoke the media data interface, the media data interface is used to invoke the second capability, and the second capability comprises a capability for performing one or more of the following processing on the media file: managing creation of the media file, managing use of the media file, storing the media file, managing deletion and restoration of the media file, and managing storage space for the media file; and the method comprises:
running the first application on the first operating system, and displaying a first user interface of the first application, wherein a first option corresponding to the first function is presented on the first user interface, and the first function comprises a file access function;
enabling the file access function and displaying a second user interface in response to a first user operation on the first option, wherein the second user interface comprises one or more media files;
detecting a second user operation of selecting a first media file from the one or more media files, and returning a resource identifier of the first media file to the first application through the media data interface; and
accessing the first media file through the first application based on the resource identifier.

2. The method according to claim 1, wherein before returning the resource identifier of the first media file through the media data interface, the method further comprises:
granting a temporary access permission to the first application to complete the file access function for the first media file.

3. The method according to claim 1, wherein the method further comprises:
when the first application has an access permission for the first media file or obtains a temporary access permission for the first media file, returning the first media file to the first application through the media data interface.

4. The method according to claim 2 or 3, wherein the method further comprises:
when the first application does not obtain the access permission or the temporary access permission for the first media file, returning, to the first application through the media data interface, a result indicating that the file access function fails to be enabled.

5. The method according to any one of claims 1 to 4, wherein a parameter input by the first interface comprises one or more of the following: a device name, an application name of the first application, and a parameter input by the first application, wherein the parameter input by the first application comprises a parameter indicating the first function and parameter content, and the parameter content comprises one or more of the following: description information of the first function, the first media file, and indication information of the first media file.

6. The method according to claim 5, wherein the media data interface is encapsulated with a third capability, and the third capability comprises a capability for performing one or more of the following processing on the first media file: acquisition, encoding, storage, sharing, decoding, and playing;
a parameter input by the media data interface comprises: interface indication information, indication information of the first function, and the first media file or the indication information of the first media file; and
the interface indication information indicates a capability invoked by the media data interface in the third capability, the indication information of the first media file is all or a part of parameters input by the first application, and/or the indication information of the first media file is determined by the first operating system.

7. The method according to any one of claims 1 to 6, wherein the first function further comprises at least one of the following functions: a file creation function, a file playing function, a file deletion function, a file restoration function, a file backup function, a file migration function, a file sharing function, and a file space management function.

8. The method according to any one of claims 5 to 7, wherein
the first function comprises the file creation function, the first media file is a data flow, the indication information of the first media file comprises one or more of the following: a file name, a file owner, a file use permission, a file storage path, a file size, and a file type, and the interface indication information indicates a capability for storing the first media file in the third capability;
or
the first function comprises the file access function, the first media file is a photo, the indication information of the first media file comprises one or more of the following: a file name, a file owner, a file storage path, a photo access permission, and a photo access manner, and the interface indication information indicates a capability for storing the first media data in the third capability;
or
the first function comprises the file playing function, the first media file is an audio or a video, the indication information of the first media file comprises one or more of the following: a file name, a file owner, a file size, a playing manner, and playing duration, and the interface indication information indicates a capability for playing the first media data in the third capability;
or
the first function comprises the file deletion function, the indication information of the first media file comprises one or more of the following: a file name, a file owner, a file storage path, a file size, and a file deletion manner, and the interface indication information indicates a capability for storing the first media file in the third capability;
or
the first function comprises the file restoration function, the indication information of the first media file comprises one or more of the following: a file name, a file owner, a restorable file size, and restorable content, and the interface indication information indicates a capability for storing the first media file in the third capability.

9. The method according to any one of claims 1 to 8, wherein the second capability comprises a generation service capability, wherein
the generation service capability is used to create the first media file, and set one or more of the following fields for the first media file when creating the first media file: a file owner, a file name, a file storage path, a file use permission, or a file attribute, wherein the first media file is one of a text, a photo, an audio, or a video.

10. The method according to claim 9, wherein files with a same file owner on the first electronic device are stored in a same root folder in sequence.

11. The method according to any one of claims 1 to 10, wherein the second capability comprises a use service capability, wherein
the use service capability is used to manage and control a use permission for the first media file, or determine, based on a use manner corresponding to the parameter input by the first application, whether the first application meets a use permission for the first media file, and return a use result, wherein the use permission comprises one or more of the following: an access permission, a playing permission, an editing permission, and a sharing permission.

12. The method according to any one of claims 1 to 11, wherein the second capability comprises an elimination service capability, wherein
the elimination service capability is used to delete the first media file or restore the first media file based on the parameter input by the first application.

13. The method according to any one of claims 1 to 12, wherein the second capability comprises a storage service capability, wherein
the storage service capability is used to store the first media file in a corresponding storage location based on the parameter input by the first application, and return a storage result, or back up or migrate the first media file.

14. The method according to any one of claims 1 to 13, wherein the second capability comprises a space management capability, wherein
the space management capability is used to perform one or more of the following: managing storage space for the first media file, setting a storage location of the first media file in the storage space, and when free storage space in the storage space is less than a preset threshold, deduplicating or compressing a file stored in the storage space.

15. An electronic device, wherein a first operating system runs on the first electronic device, a first application is installed on the first operating system, and the first operating system provides a first interface, a media data interface, and a second capability; and the first application comprises program code for invoking the first interface, the first interface is used to enable a first function provided by the first application, the first interface is used to invoke the media data interface, the media data interface is used to invoke the second capability, and the second capability comprises a capability for performing one or more of the following processing on the media file: managing creation of the media file, managing use of the media file, storing the media file, managing deletion and restoration of the media file, and managing storage space for the media file; and
the electronic device comprises a memory, a processor, and a computer program stored in the memory, and the processor executes the computer program to implement the method according to any one of claims 1 to 14.

16. A computer-readable storage medium, wherein the computer-readable storage medium stores a computer program, the computer program comprises a first operating system, a first application is installed on the first operating system, and the first operating system provides a first interface, a media data interface, and a second capability; and the first application comprises program code for invoking the first interface, the first interface is used to enable a first function provided by the first application, the first interface is used to invoke the media data interface, the media data interface is used to invoke the second capability, and the second capability comprises a capability for performing one or more of the following processing on the media file: managing creation of the media file, managing use of the media file, storing the media file, managing deletion and restoration of the media file, and managing storage space for the media file; and
when the computer program is executed by a processor, the method according to any one of claims 1 to 14 is implemented.

17. A computer program product, wherein the computer program product comprises a computer program, the computer program comprises a first operating system, a first application is installed on the first operating system, and the first operating system provides a first interface, a media data interface, and a second capability; and the first application comprises program code for invoking the first interface, the first interface is used to enable a first function provided by the first application, the first interface is used to invoke the media data interface, the media data interface is used to invoke the second capability, and the second capability comprises a capability for performing one or more of the following processing on the media file: managing creation of the media file, managing use of the media file, storing the media file, managing deletion and restoration of the media file, and managing storage space for the media file; and
when the computer program is executed by a processor, the method according to any one of claims 1 to 14 is implemented.
